# EUROPÄISCHE PATENTANMELDUNG

(11) **EP 4 843 376 A1**
(43) Veröffentlichungstag der Anmeldung: **25.11.2026**
(21) Anmeldenummer: 26179237.8
(22) Anmeldetag: 18.05.2026
(51) Int. Cl.: A01D 34/66, A01D 57/20, A01D 75/30

(54) **MÄHKOMBINATION FÜR EIN LANDWIRTSCHAFTLICHES FAHRZEUG**

(30) Priorität: 20.05.2025 DE 102025119608
(71) Anmelder: Pöttinger Landtechnik GmbH, 4710 Grieskirchen (AT)
(72) Erfinder: SALFINGER, Thomas, 4710 Grieskirchen (AT); EICHLSEDER, Matthias, 4710 Grieskirchen (AT); REININGER, Markus, 4710 Grieskirchen (AT); ANGLEITNER, Norbert, 4710 Grieskirchen (AT)
(74) Vertreter: Cornet, Simon

(57) **Zusammenfassung**

Die Erfindung betrifft eine Mähkombination (1) für ein landwirtschaftliches Fahrzeug (2), umfassend eine Anzahl von Mähwerken (3) zum Schneiden von Erntegut und je Mähwerk (3) eine Fördereinheit (4) zum Fördern des geschnittenen Ernteguts in einer Förderrichtung (F), die im Betrieb quer zu einer Fahrzeuglängsachse (L) des landwirtschaftlichen Fahrzeugs (2) verläuft, wobei für jede Fördereinheit (4) eine Schwenkeinrichtung (5) vorgesehen ist, die dazu ausgebildet ist, die Fördereinheit (4) relativ zum zugehörigen Mähwerk (3) zwischen einer Arbeitsposition und einer Bereitschaftsposition zu verschwenken, wobei eine Steuerungseinheit (6) zur Steuerung der Mähkombination (1) vorgesehen ist, die dazu ausgebildet ist, die Mähkombination (1) abhängig von einer geographischen Information (I) in einem festgelegten Betriebsmodus zu betreiben.

## Beschreibung

Die Erfindung betrifft eine Mähkombination für ein landwirtschaftliches Fahrzeug, umfassend eine Anzahl von Mähwerken zum Schneiden von Erntegut und je Mähwerk eine Fördereinheit zum Fördern des geschnittenen Ernteguts in einer Förderrichtung, die im Betrieb quer zu einer Fahrzeuglängsachse des landwirtschaftlichen Fahrzeugs verläuft, wobei für jede Fördereinheit eine Schwenkeinrichtung vorgesehen ist, die dazu ausgebildet ist, die Fördereinheit relativ zum zugehörigen Mähwerk zwischen einer Arbeitsposition und einer Bereitschaftsposition zu verschwenken und wobei eine Steuerungseinheit zur Steuerung der Mähkombination vorgesehen ist.

Die Erfindung betrifft zudem ein Verfahren zum Betreiben eines landwirtschaftlichen Fahrzeugs, wobei an einem Heck des Fahrzeugs eine Mähkombination befestigt ist, die eine Anzahl von Mähwerken zum Schneiden von Erntegut und je Mähwerk eine Fördereinheit zum Fördern des geschnittenen Ernteguts in einer, insbesondere bestimmungsgemäß unveränderbaren, Förderrichtung, die quer zu einer Fahrzeuglängsachse des landwirtschaftlichen Fahrzeugs verläuft, umfasst, wobei für jede Fördereinheit eine Schwenkeinrichtung vorgesehen ist, die dazu ausgebildet ist, die Fördereinheit relativ zum zugehörigen Mähwerk zwischen einer Arbeitsposition und einer Bereitschaftsposition zu verschwenken und wobei die Mähkombination mittels einer Steuerungseinheit gesteuert wird.

Eine Mähkombination ist ein Gerät, das sowohl zum Mähen als auch zum Schwaden von Erntegut, insbesondere Grasschnitt oder anderen Futterpflanzen, verwendet wird. Eine Mähkombination weist in der Regel ein Mähwerk und eine dem Mähwerk zugeordnete Fördereinheit. Das Mähwerk dient dazu, die Pflanzen abzuschneiden und kann beispielsweise ein Scheibenmähwerk oder Sichelmähwerk aufweisen. Die Fördereinheit dient dazu, die geschnittenen Pflanzen zu einem sogenannten Schwad zu formen. Das Schwad kann auf dem Feld liegen bleiben und später, beispielsweise mit einem geeigneten Ladewagen, aufgenommen werden.

Die Mähkombination kann an einem landwirtschaftlichen Fahrzeug, insbesondere an einem Traktor, angehängt oder aufgehängt werden und ermöglicht es, effizient große Flächen zu mähen und zu Schwaden zu formen. Dies ist besonders nützlich in der Landwirtschaft, um Futtermittel für Tiere zu produzieren oder um das Feld für nachfolgende Kulturen vorzubereiten.

Landwirtschaftliche Flächen wie Felder oder Wiesen weisen im Randbereich üblicherweise ein sogenanntes Vorgewende auf. Dabei handelt es sich um einen schmalen Streifen Land, der sich entlang der Grenze der landwirtschaftlichen Fläche erstreckt. Es dient insbesondere dem Schutz der Ernte, da es die Hauptfläche der landwirtschaftlichen Fläche vor Beschädigungen durch landwirtschaftliche Fahrzeuge beim Wenden oder Rangieren schützt. Durch das Fahren auf dem Vorgewende wird das Erntegut der landwirtschaftlichen Fläche nicht beeinträchtigt. Zudem kann das Vorgewende als Sicherheitszone dienen, um Unfälle und Kollisionen zwischen Fahrzeugen zu vermeiden, insbesondere in größeren landwirtschaftlichen Betrieben mit mehreren Maschinen und Fahrzeugen.

Aktuell muss die Position des Schwades (Seitenschwad, Mittenschwad) abhängig von der Fahrtrichtung und Situation vom Bediener manuell bzw. teil-automatisiert eingestellt werden, beispielsweise über eine Bedienkonsole des landwirtschaftlichen Fahrzeugs. Insbesondere bei einer sogenannten arhythmischen Fahrstrategie (z.B. 3 Spuren = 1 Schwad) oder beim Fahren in Beeten, muss nach jeder Bahn die Position der Schwadablage manuell bzw. durch manuellen Eingriff verändert werden. Dieser Arbeitsvorgang dauert Zeit und fordert beim gleichzeitigen Wendevorgang hohe Aufmerksamkeit des Bedieners. Das kann insbesondere bei längerem Betrieb zu Fehlerhäufungen, einem erhöhten Unfallrisiko durch Unachtsamkeit und letztendlich zu einer verringerten Flächenleistung pro Stunde führen.

Aufgabe der vorliegenden Erfindung war es daher eine Mähkombination sowie ein Verfahren zum Betreiben eines mit einer Mähkombination ausgestattetem landwirtschaftlichen Fahrzeug bereitzustellen, durch welche die Handhabung für den Bediener erleichtert wird.

Diese Aufgabe wird durch die eingangs genannte Mähkombination dadurch gelöst, dass die Steuerungseinheit dazu ausgebildet ist, die Mähkombination abhängig von einer geographischen Information des landwirtschaftlichen Fahrzeugs in einem festgelegten Betriebsmodus zu betreiben. Durch die automatische Steuerung der Mähkombination abhängig von der geographischen Information kann das landwirtschaftliche Fahrzeug effizienter genutzt werden. Dies kann zu einer schnelleren und gründlicheren Ernte führen. Die geographische Information umfasst vorzugsweise zumindest eine der folgenden Informationen: einen aktuellen Standort des Fahrzeugs, eine geplante Routenführung des Fahrzeugs, eine Geländeinformation, eine Information über das Erntegut. Die Steuerung der Mähkombination basierend auf der Ortsinformation, der Routenführung, usw. kann beispielsweise dazu beitragen, die Erntequalität zu optimieren, indem sicherstellt wird, dass die Mähwerke und Fördereinheiten optimal eingesetzt werden. Die automatische Steuerung der Mähkombination basierend auf den erhaltenen Informationen reduziert zudem die Belastung des Bedieners und ermöglicht eine komfortablere und konzentriertere Arbeit, da die Einstellungen der Mähkombination während der Fahrt nicht oder nur mehr in sehr geringem Ausmaß manuell geändert werden muss. Wenn die Mähkombination mehrere Mähwerke mit Fördereinheiten und Schwenkeinrichtungen umfasst, dann können diese vorzugsweise von der Steuerungseinheit voneinander unabhängig in Abhängigkeit der Information angesteuert werden. Die Schwenkeinrichtung kann beispielsweise dazu ausgebildet sein, die zugehörige Fördereinheit im Betrieb um eine parallel zu einer Fahrzeug-Querachse des landwirtschaftlichen Fahrzeugs liegende Schwenkachse zu verschwenken. Das Mähwerk kann beispielsweise ein Scheibenmähwerk oder Sichelmähwerk aufweisen. Die geographische Information, insbesondere der aktuelle Standort, kann beispielsweise über ein Navigationssystem des landwirtschaftlichen Fahrzeugs bereitgestellt werden. Alternativ könnte die geographische Information beispielsweise auch von einem mobilen Endgerät, z.B. einem Mobiltelefon, bereitgestellt werden. Es wäre auch möglich, dass die geographische Information in der Steuerungseinheit hinterlegt ist.

Es ist vorteilhaft, wenn der festgelegte Betriebsmodus ein selektives Aktivieren und Deaktivieren zumindest von Teilen der Mähkombination umfasst, insbesondere der Anzahl von Mähwerken und/oder Fördereinheiten und/oder Schwenkeinrichtungen. Dadurch kann die Sicherheit für Mensch und Tier erhöht werden, indem die Mähkombination beispielsweise in bestimmten Bereichen selektiv und automatisiert deaktiviert werden kann. Durch die selektive Abschaltung der Mähkombination kann auch Kraftstoff gespart werden, was zu einer Kosteneinsparung führt. Wenn die Mähkombination mehrere Mähwerke mit Fördereinheiten und Schwenkeinrichtungen umfasst, dann können diese beispielsweise voneinander unabhängig aktiviert bzw. deaktiviert werden. Beispielsweise können in einem bestimmten Ort oder auf einer bestimmten Route ein Mähwerk und die zugehörige Fördereinheiten deaktiviert werden, während ein anderes Mähwerk und die zugehörige Fördereinheiten aktiviert werden können.

Beispielsweise kann die erhaltene geographische Information eine Information über einen Wendevorgang enthalten und die Steuerungseinheit kann dazu ausgebildet sein, die Mähkombination während des Wendevorgangs zumindest teilweise zu deaktivieren. Insbesondere kann die Anzahl von Mähwerken und/oder Fördereinheiten während des Wendevorgangs deaktiviert werden und/oder die Anzahl von Schwenkeinrichtung kann derart ansteuert werden, dass die Fördereinheit während des Wendevorgangs automatisch in die Bereitschaftsposition verschwenkt wird. Dadurch kann beispielsweise im Vorgewende, wo kein Mähen erforderlich ist, eine vollständige automatisierte Deaktivierung der Mähkombination durchgeführt werden.

Vorzugsweise ist die Förderrichtung der Anzahl von Fördereinheiten bestimmungsgemäß unveränderbar. Eine unveränderbare Förderrichtung vereinfacht die Konstruktion und reduziert die Komplexität der Mähkombination. Dies kann zu einer erhöhten Robustheit und Zuverlässigkeit des Systems führen. Da die Förderrichtung fest ist, werden bewegliche Teile, die für eine veränderliche Förderrichtung notwendig wären, eliminiert. Dies reduziert den Verschleiß und die Wartungsanforderungen. Weniger bewegliche Teile bedeuten weniger potenzielle Fehlerquellen und eine geringere Wahrscheinlichkeit von mechanischen Ausfällen, was die Sicherheit während des Betriebs erhöht. Die Steuerung der Mähkombination wird zudem einfacher, da die Förderrichtung nicht angepasst werden muss. Dies erleichtert die Programmierung und Automatisierung der Maschine. Ferner kann eine kompaktere und effizientere Bauweise der Fördereinheiten erreicht werden

Es ist vorteilhaft, wenn zumindest für eine der Anzahl von Fördereinheiten eine Auswurfeinrichtung zum Auswerfen von gefördertem Erntegut vorgesehen ist, wobei die Steuerungseinheit dazu ausgebildet ist, die Auswurfeinrichtung, vorzugsweise unabhängig von der Fördereinheit, zu steuern, wobei die Steuerungseinheit dazu ausgebildet ist, die Auswurfeinrichtung abhängig von der geographischen Information in einem festgelegten Betriebsmodus zu betreiben. Die Auswurfeinrichtung ermöglicht es, das Erntegut gezielt an verschiedenen Stellen abzuladen, was die Flexibilität bei der Verwaltung und Lagerung des Ernteguts erhöht. Durch die gezielte Steuerung der Auswurfeinrichtung kann die Auswurfweite verändert und damit die Erntequalität verbessert werden, indem das Erntegut gleichmäßig verteilt oder spezifische Bereiche gezielt mit Erntegut versorgt werden. Die Möglichkeit, die Auswurfeinrichtung unabhängig von der Fördereinheit zu steuern, ermöglicht eine bessere Anpassung an verschiedene Feldbedingungen und Erntearten, was die Effizienz und Qualität der Ernte weiter verbessert.

Die Auswurfeinrichtung kann beispielsweise eine Anzahl von angetriebenen Profilrollen umfassen, die jeweils um eine quer zur Förderrichtung verlaufende Drehachse drehbar sind. Alternativ oder zusätzlich kann die Auswurfeinrichtung zumindest einen Stetigförderer, vorzugsweise ein Förderband, umfassen. Es kann auch vorteilhaft sein, wenn die Auswurfeinrichtung eine Schwenkeinheit zum rotatorischen Schwenken der Auswurfeinrichtung relativ zur Fördereinheit, insbesondere zur Veränderung eines Auswurfwinkel des Ernteguts, umfasst. Alternativ oder zusätzlich kann die Auswurfeinrichtung eine Verstelleinheit zum translatorischen Verstellen der Auswurfeinrichtung relativ zur Fördereinheit, insbesondere zur Veränderung eines Auswurfwinkels des Ernteguts, umfassen. Die Schwenkeinheit und/oder die Verstelleinheit können von der Steuerungseinheit, vorzugsweise unabhängig von einem Antrieb der Auswurfeinrichtung, ansteuerbar sein. Durch die Wahl der Drehzahl der Profilrolle/n bzw. der/des Stetigförderer/s und durch die Wahl des Auswurfwinkels kann die Auswurfweite des Ernteguts eingestellt bzw. verändert werden.

Vorzugsweise ist für zumindest eine der Anzahl von Mähwerken eine Aufbereitungsvorrichtung für geschnittenes Erntegut vorgesehen, die von die von der Steuerungseinheit ansteuerbar ist, wobei die Steuerungseinheit vorzugsweise dazu ausgebildet ist, die Aufbereitungsvorrichtung abhängig von der geographischen Information in einem festgelegten Betriebsmodus zu betreiben. Die Aufbereitungsvorrichtung umfasst vorzugsweise einen Zinkenaufbereiter oder Walzenaufbereiter. Dadurch kann das geschnittene Erntegut für eine verbesserte Trocknung aufbereitet werden, beispielsweise abhängig vom aktuellen Standort des Fahrzeugs.

Es ist vorteilhaft, wenn für zumindest eines der Anzahl von Mähwerken eine verstellbare Leiteinrichtung zum Leiten von mittels des Mähwerks geschnittenem Erntegut und/oder zum Leiten von mittels der Aufbereitungsvorrichtung aufbereitetem Erntegut vorgesehen ist, die von der Steuerungseinheit steuerbar ist, wobei die Steuerungseinheit vorzugsweise dazu ausgebildet ist, die Leiteinrichtung abhängig von der geographischen Information in einem festgelegten Betriebsmodus zu betreiben. Dadurch kann eine sogenannte Breitstreuung des Ernteguts mit breiterer Ablage erzielt werden. Insbesondere in Kombination mit der Auswurfeinrichtung kann eine sehr gleichmäßige Ablage des Ernteguts erreicht werden, wodurch eine verbesserte Anwelkung des Ernteguts erreicht werden kann. Die Leiteinrichtung kann beispielsweise ein geeignetes Leitblech umfassen, das relativ zum Mähwerk unbeweglich ist und kann eine Anzahl von beweglichen Leitschaufeln umfassen, die relativ zum Leitblech verstellbar sind. Die Verwendung kann beispielsweise automatisiert abhängig vom aktuellen Standort des Fahrzeugs erfolgen.

Vorzugsweise umfasst die Mähkombination eine, insbesondere standardisierte, Aufhängung zur aufgehängten Befestigung am landwirtschaftlichen Fahrzeug. Alternativ kann die Mähkombination ein Fahrwerk umfassen und eine Zugeinrichtung, die mit dem landwirtschaftlichen Fahrzeug koppelbar ist, um die Mähkombination ähnlich einem Anhänger zu ziehen. Die Aufhängung kann beispielsweise als bekannte Drei-Punkt-Aufhängung ausgebildet sein. Die Kopplung der Zugeinrichtung mit dem Fahrzeug könnte über eine Deichsel des Fahrzeugs erfolgen.

Es kann vorteilhaft sein, wenn die Mähkombination einen Verstaumechanismus umfasst, der dazu ausgebildet ist, die Anzahl von Mähwerken inkl. Fördereinheit relativ zur Aufhängung oder relativ zum Fahrwerk von einer Betriebsposition in eine Transportposition zu verlagern, wobei die Anzahl von Fördereinheiten in der Transportposition vorzugsweise so angeordnet sind, dass die Förderrichtung im Wesentlichen parallel zu einer Fahrzeug-Hochachse des landwirtschaftlichen Fahrzeugs ausgerichtet ist, wobei die Steuerungseinheit vorzugsweise dazu ausgebildet ist, den Verstaumechanismus in Abhängigkeit der geographischen Information in einem festgelegten Betriebsmodus zu betreiben. Dadurch kann eine platzsparende Transportposition bereitgestellt werden, die insbesondere für die Anfahrt zum Feld bzw. die Abfahrt vom Feld vorteilhaft ist. Die Mähkombination kann beispielsweise automatisiert abhängig vom aktuellen Standort in die Transportposition verlagert werden. Dadurch kann die Mähkombination beispielsweise am Ende eines Mähvorgangs automatisch in die Transportposition verlagert werden, wodurch Zeit gespart werden kann.

Es kann vorteilhaft sein, wenn die Zugeinrichtung dazu ausgebildet ist, die Mähkombination im Betrieb mit einem seitlichen Versatz zum landwirtschaftlichen Fahrzeug zu ziehen. Die Möglichkeit, die Mähkombination mit einem seitlichen Versatz zum landwirtschaftlichen Fahrzeug zu ziehen, ermöglicht es, die Arbeitsweise der Maschine an verschiedene Anforderungen und Gegebenheiten anzupassen. Ein seitlicher Versatz kann die Sicht des Bedieners verbessern und ihm eine bessere Kontrolle über die Arbeitsprozesse ermöglichen, was die Sicherheit und Effizienz weiter erhöht. Ferner kann durch einen seitlichen Versatz die Beschädigung des Bodens minimiert werden, insbesondere in sensiblen Bereichen oder bei unebenem Gelände.Die Zugeinrichtung kann eine Lenkvorrichtung umfassen, die dazu ausgebildet ist, die Mähkombination zumindest in eine erste Versatzposition zu lenken, die sich im Betrieb rechts der Fahrzeug-Längsachse befindet und in eine zweite Versatzposition zu lenken, die sich im Betrieb links der Fahrzeug-Längsachse befindet, wobei die Lenkvorrichtung von der Steuerungseinheit derart ansteuerbar ist, dass die Mähkombination abhängig von der geographischen Information in eine Versatzposition lenkbar ist. Durch das Lenken der Mähkombination in verschiedene Versatzpositionen kann die effektive Arbeitsbreite der Maschine vergrößert oder angepasst werden. Dies kann dazu beitragen, die Arbeitsgeschwindigkeit zu erhöhen und die Effizienz zu steigern. Die Integration einer Lenkvorrichtung, die von einer Steuerungseinheit abhängig von geographischer Information angesteuert wird, ermöglicht eine präzise und automatisierte Steuerung der Mähkombination. Dies kann die Bedienung erleichtern und die Genauigkeit der Arbeitsprozesse erhöhen, da insbesondere kein manueller Eingriff durch den Bediener mehr erforderlich ist, um die Mähkombination in die gewünschte Versatzposition zu bringen. Die Lenkvorrichtung könnte beispielsweise einen ersten Schwenkantrieb umfassen, der im Bereich eines ersten Endes der Zugstange vorgesehen sein kann, welches zur Kopplung mit dem Fahrzeug, insbesondere einer Deichsel, vorgesehen ist. Ferner könnte die Lenkvorrichtung einen zweiten Schwenkantrieb umfassen, der im Bereich eines zweiten Endes der Zugstange vorgesehen sein kann, welches mit der Mähkombination verbunden oder verbindbar ist. Die Schwenkantriebe können beispielsweise ein Schwenkgetriebe, einen hydraulischen Aktuator oder einen elektrischen Aktuator umfassen.

Es ist vorteilhaft, wenn die Mähkombination einen hydraulischen Antrieb umfasst, der dazu ausgebildet ist, vom landwirtschaftlichen Fahrzeug mit Antriebsenergie versorgt zu werden, wobei der hydraulische Antrieb vorzugsweise einen offenen Hydraulikkreis aufweist, der mit einem Hydraulikkreis des landwirtschaftlichen Fahrzeugs koppelbar ist und/oder einen geschlossenen Hydraulikkreis mit zumindest einer Hydraulikpumpe aufweist, die von einem mechanischen Abtrieb des landwirtschaftlichen Fahrzeugs antreibbar ist. Dadurch kann die Mähkombination im Wesentlichen passiv ausgebildet sein und vom Fahrzeug mit der nötigen Energie versorgt werden. Hydraulische Antrieb sind in der Regel robust und können hohe Belastungen und Vibrationen aushalten, was zu einer höheren Zuverlässigkeit und Langlebigkeit der Mähkombination führt. Die Möglichkeit, sowohl offene als auch geschlossene Hydraulikkreise zu verwenden, erleichtert die bedarfsweise Verwendung der Mähkombination an verschiedenen landwirtschaftlichen Fahrzeugen.

Alternativ oder zusätzlich kann die Mähkombination einen elektrischen Antrieb umfassen, der dazu ausgebildet ist, vom landwirtschaftlichen Fahrzeug mit elektrischer Antriebsenergie versorgt zu werden. Elektrische Antriebe sind in der Regel sehr effizient, da sie direkte Energieübertragung ohne mechanische Verluste ermöglichen. Dies führt zu einem geringeren Energieverbrauch und höheren Effizienz im Betrieb. Elektrische Antriebe sind im Betrieb relativ leise, was die Arbeitsbedingungen für den Bediener verbessert und die Störung der Umgebung minimiert. Da elektrische Antriebe kein Hydrauliköl benötigen, besteht keine Gefahr von Leckage und Verunreinigung.

Alternativ oder zusätzlich kann die Mähkombination auch einen mechanischen Antrieb umfassen, der dazu ausgebildet ist, von einem mechanischen Abtrieb des landwirtschaftlichen Fahrzeugs mit Antriebsenergie versorgt zu werden. Mechanische Antriebe haben in der Regel weniger bewegliche Teile und weniger Verschleißteile im Vergleich zu elektrischen oder hydraulischen Systemen, was zu geringeren Wartungsanforderungen und längeren Lebensdauern führt. Beispielsweise kann die Mähkombination über eine Zapfwelle vom Fahrzeug angetrieben werden. Ggf. könne auch eine oder mehrere Gelenkwellen und/oder Getriebe vorgesehen sein. Auch eine Kombination mit einem hydraulischen Antrieb und oder einem elektrischen Antrieb wäre denkbar.

Es ist vorteilhaft, wenn die Steuerungseinheit eine Kommunikationsschnittstelle aufweist und über eine Kommunikationsverbindung mit einer Fahrzeug-Steuerungseinheit des landwirtschaftlichen Fahrzeugs verbindbar ist, wobei die Mähkombination vorzugsweise zumindest teilweise über die Fahrzeug-Steuerungseinheit steuerbar ist und/oder wobei eine Anzahl von Signalen, insbesondere umfassend die geographische Information, über die Kommunikationsverbindung von der Fahrzeug-Steuerungseinheit an die Steuerungseinheit übermittelbar sind. Dadurch kann eine zentrale Steuerung und Koordination des Arbeitsprozesses erfolgen, wodurch eine effizientere Arbeitsweise möglich ist. Der Bediener kann verschiedene Funktionen und Parameter der Mähkombination somit direkt vom Fahrzeug steuern, beispielsweise über eine bestehende Benutzerschnittstelle des Fahrzeugs. Die zentrale Steuerung vereinfacht die Bedienung der Mähkombination für den Bediener, da alle relevanten Funktionen und Parameter über eine einzige Schnittstelle zugänglich sind. Die Kommunikationsverbindung ermöglicht eine nahtlose Integration der Mähkombination in das bestehende Fahrzeug-Steuerungssystem. Dies kann die Kompatibilität und Flexibilität des Systems erhöhen. Durch die Verbindung der Steuerungseinheiten können Daten gesammelt und analysiert werden, um die Arbeitsprozesse zu optimieren und zukünftige Einsätze besser zu planen. Die Information über den aktuellen Standort, die geplante Routenführung, die Hangneigung, usw. kann beispielsweise über ein Navigationssystems des Fahrzeugs bereitgestellt werden. Alternativ oder zusätzlich zur geographischen Information können auch andere Signale, beispielsweise von Sensoren des Fahrzeugs erfasste Messgrößen, übermittelt und von der Steuerungseinheit verarbeitet werden. Die Kommunikationsschnittstelle der Steuerungseinheit kann beispielsweise eine bekannten drahtgebundenen oder drahtlosen Kommunikationsstandard unterstützen, z.B. ISOBUS, CAN-Bus, WLAN, Bluetooth, o.ä.

Es kann vorteilhaft sein, wenn die Mähkombination ein Sensorsystem zur Erfassung der geographischen Information umfasst. Das Sensorsystem könnte beispielsweise eine Anzahl von optischen Sensoren, insbesondere geeignete Kameras, aufweisen. Das Sensorsystem kann eine Auswerteeinheit umfassen, die dazu ausgebildet sein kann, aus den aufgenommenen Bildern der Kamera/s, die geographische Information zu ermitteln. Das Sensorsystem könnte beispielsweise auch eine Drohne umfassen, welche dazu ausgebildet ist, im Betrieb oberhalb der Mähkombination zu fliegen. Die Drohne kann beispielsweise die Anzahl von Kameras umfassen. Die Auswerteeinheit kann natürlich auch in der Steuerungseinheit der Mähkombination enthalten sein. Auch andere Arten von Sensoren wären natürlich denkbar.

Es ist vorteilhaft, wenn die Mähkombination zumindest zwei Mähwerke mit jeweils einer Fördereinheit und einer Schwenkeinrichtung und optional einer Aufbereitungsvorrichtung und/oder einer Leiteinrichtung und/oder einer Auswurfeinrichtung umfasst, wobei die Mähwerke im Betrieb so angeordnet sind, dass sich die Fahrzeug-Längsachse des landwirtschaftlichen Fahrzeugs zwischen den beiden Mähwerken befindet und die beiden Mähwerke von der Fahrzeug-Längsachse beabstandet sind und wobei die Förderrichtungen der beiden Fördereinheiten vorzugsweise einander zugewandt sind und wobei die Steuerungseinheit dazu ausgebildet ist, die Mähwerke und/oder Fördereinheiten und/oder Schwenkeinrichtungen und/oder Aufbereitungsvorrichtungen und/oder Leiteinrichtungen zu steuern, insbesondere selektiv zu aktivieren und deaktivieren. Durch die Verwendung von zwei Mähwerken kann die Arbeitsbreite und somit die Arbeitsgeschwindigkeit erhöht werden, was zu einer effizienteren und produktiveren Arbeitsweise führt. Die beiden Mähwerke inkl. Fördereinheiten und ggf. weitere Komponenten können selektiv abhängig von der erhaltenen Ortsinformation oder Routeninformation aktiviert und deaktiviert werden.

Die Mähkombination kann am Heck eines landwirtschaftlichen Fahrzeugs angeordnet sein, wobei die Steuerungseinheit der Mähkombination entweder über eine Kommunikationsverbindung mit einer Fahrzeug-Steuerungseinheit des landwirtschaftlichen Fahrzeugs verbunden sein kann und die Fahrzeug-Steuerungseinheit dazu ausgebildet sein kann, die geographische Information an die Steuerungseinheit der Mähkombination zu übermitteln oder wobei die Steuerungseinheit der Mähkombination in der Fahrzeug-Steuerungseinheit integriert sein kann und die Fahrzeug-Steuerungseinheit dazu ausgebildet sein kann, die Mähkombination zu steuern. Dadurch kann die Steuerung der Mähkombination in die Steuerungsarchitektur des landwirtschaftlichen Fahrzeugs integriert werden. Die Mähkombination kann somit beispielsweise aus dem Cockpit des Fahrzeugs über eine Bedieneinheit des Fahrzeugs bedient werden.

Es ist vorteilhaft, wenn an einer Front des Fahrzeugs ein Front-Mähwerk angeordnet ist, das von der Fahrzeug-Steuerungseinheit steuerbar ist und dass die Fahrzeug-Steuerungseinheit dazu ausgebildet ist, das Front-Mähwerk abhängig von der geographischen Information in einem festgelegten Betriebsmodus zu betreiben. Dadurch kann die Funktionalität der automatisierten ortsabhängigen Steuerung auf ein gängiges Front-Mähwerk erweitert werden.

Die Aufgabe wird zudem durch das eingangs genannte Verfahren dadurch gelöst, dass die Steuerungseinheit die Mähkombination abhängig von einer geographischen Information in einem festgelegten Betriebsmodus betreibt, wobei vorzugsweise die Anzahl von Mähwerken und/oder Fördereinheiten und/oder Schwenkeinrichtungen von der Steuerungseinheit in Abhängigkeit der abhängig von der Information selektiv aktiviert und deaktiviert werden. Die Mähkombination kann wie oben beschrieben ausgebildet sein. Die geographische Information umfasst vorzugsweise zumindest eine der folgenden Informationen: einen aktuellen Standort des Fahrzeugs, eine geplante Routenführung des Fahrzeugs, eine Geländeinformation, eine Information über das Erntegut. Es ergeben sich die bereits beschriebenen Vorteile.

Die geographische Information enthält vorzugsweise eine Information über einen Wendevorgang und die Steuerungseinheit deaktiviert die Anzahl von Mähwerken und/oder Fördereinheiten während des Wendevorgangs und/oder steuert die Anzahl von Schwenkeinrichtung derart an, dass die zugehörige Fördereinheit während des Wendevorgangs automatisch in die Bereitschaftsposition verschwenkt wird.

Es ist vorteilhaft, wenn das von einer Fördereinheit geförderte Erntegut mittels einer Auswurfeinrichtung ausgeworfen wird, die in Förderrichtung gesehen an die Fördereinheit anschließend angeordnet ist, wobei die Auswurfeinrichtung von der Steuerungseinheit, vorzugsweise unabhängig von der Fördereinheit, gesteuert wird, insbesondere in Abhängigkeit der geographischen Information.

Es kann vorteilhaft sein, wenn ein Auswurfwinkel des Ernteguts verändert wird, indem die Auswurfeinrichtung mittels einer Schwenkeinheit verschwenkt wird, wobei die Schwenkeinheit von der Steuerungseinheit, vorzugsweise unabhängig von einem Antrieb der Auswurfeinrichtung, gesteuert wird.

Optional kann das von einem Mähwerk geschnittene Erntegut mittels einer Aufbereitungsvorrichtung aufbereitet werden, wobei die Aufbereitungsvorrichtung von der Steuerungseinheit, vorzugsweise in Abhängigkeit der geographischen Information, gesteuert wird.

Es kann vorteilhaft sein, wenn das von einem Mähwerk geschnittene Erntegut und/oder das von einer Aufbereitungsvorrichtung aufbereitete Erntegut mittels einer verstellbaren Leiteinrichtung geleitet wird, wobei die Leiteinrichtung von der Steuerungseinheit gesteuert wird, vorzugsweise abhängig von der geographischen Information.

Vorzugsweise wird die Mähkombination mittels einer, vorzugsweise standardisierten, Aufhängung aufgehängt am Heck des landwirtschaftlichen Fahrzeugs befestigt. Alternativ kann die Mähkombination ein Fahrwerk umfassen und mittels einer Zugeinrichtung vom landwirtschaftlichen Fahrzeug gezogen werden.

Optional kann die Mähkombination mittels der Zugeinrichtung mit einem seitlichen Versatz zum landwirtschaftlichen Fahrzeug gezogen werden. Es kann vorteilhaft sein, wenn die Mähkombination mittels einer Lenkvorrichtung der Zugeinrichtung zumindest in eine erste Versatzposition gelenkt werden kann, die sich rechts der Fahrzeug-Längsachse befindet und in eine zweite Versatzposition gelenkt werden kann, die sich links der Fahrzeug-Längsachse befindet. Die Lenkvorrichtung kann von der Steuerungseinheit derart angesteuert werden, dass die Mähkombination abhängig von der geographischen Information in eine Versatzposition gelenkt wird.

Es ist vorteilhaft, wenn die Anzahl von Mähwerken inkl. Fördereinheit mittels eines Verstaumechanismus relativ zur Aufhängung oder relativ zum Fahrwerk von einer Betriebsposition in eine Transportposition verlagert werden, wobei die Anzahl von Fördereinheiten in der Transportposition vorzugsweise so angeordnet sind, dass die Förderrichtung im Wesentlichen parallel zu einer Fahrzeug-Hochachse des landwirtschaftlichen Fahrzeugs ausgerichtet ist, wobei der Verstaumechanismus vorzugsweise von der Steuerungseinheit in Abhängigkeit der geographischen Information angesteuert wird.

Vorzugsweise umfasst die Mähkombination einen hydraulischen Antrieb, der vom landwirtschaftlichen Fahrzeug mit Antriebsenergie versorgt wird, wobei der hydraulische Antrieb vorzugsweise einen offenen Hydraulikkreis aufweist, der mit einem Hydraulikkreis des landwirtschaftlichen Fahrzeugs gekoppelt wird und/oder einen geschlossenen Hydraulikkreis mit zumindest einer Hydraulikpumpe aufweist, die von einem mechanischen Abtrieb des landwirtschaftlichen Fahrzeugs angetrieben wird.

Es kann vorteilhaft sein, wenn die Mähkombination einen elektrischen Antrieb umfasst, der vom landwirtschaftlichen Fahrzeug mit elektrischer Antriebsenergie versorgt wird.

Alternativ oder zusätzlich kann die Mähkombination auch einen mechanischen Antrieb umfassen, der von einem mechanischen Abtrieb, insbesondere einer Zapfwelle, des landwirtschaftlichen Fahrzeugs mit Antriebsenergie versorgt wird.

Vorzugsweise wird eine Kommunikationsschnittstelle der Steuerungseinheit über eine Kommunikationsverbindung mit einer Fahrzeug-Steuerungseinheit des landwirtschaftlichen Fahrzeugs verbunden, wobei die Mähkombination vorzugsweise zumindest teilweise über die Fahrzeug-Steuerungseinheit gesteuert wird und/oder wobei die Fahrzeug-Steuerungseinheit die geographische Information über die Kommunikationsverbindung an die Steuerungseinheit der Mähkombination übermittelt.

Zum besseren Verständnis der Erfindung wird diese anhand der nachfolgenden Figuren näher erläutert.

Es zeigen jeweils in stark vereinfachter, schematischer Darstellung:
- Fig. 1: ein landwirtschaftliches Fahrzeug mit einem Font-Mähwerk und einer erfindungsgemäßen Mähkombination einer beispielhaften ersten Ausführungsform in Draufsicht,
- Fig. 2: ein landwirtschaftliches Fahrzeug mit einem Font-Mähwerk und einer erfindungsgemäßen Mähkombination einer beispielhaften zweiten Ausführungsform in Draufsicht,
- Fig. 3: eine Fördereinheit mit Auswurfeinrichtung einer beispielhaften ersten Ausführungsform in perspektivischer Ansicht,
- Fig. 4: eine Fördereinheit mit Auswurfeinrichtung einer beispielhaften zweiten Ausführungsform in perspektivischer Ansicht,
- Fig. 5: mögliche Routenführungen eines landwirtschaftlichen Fahrzeugs auf einer landwirtschaftliche Fläche in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

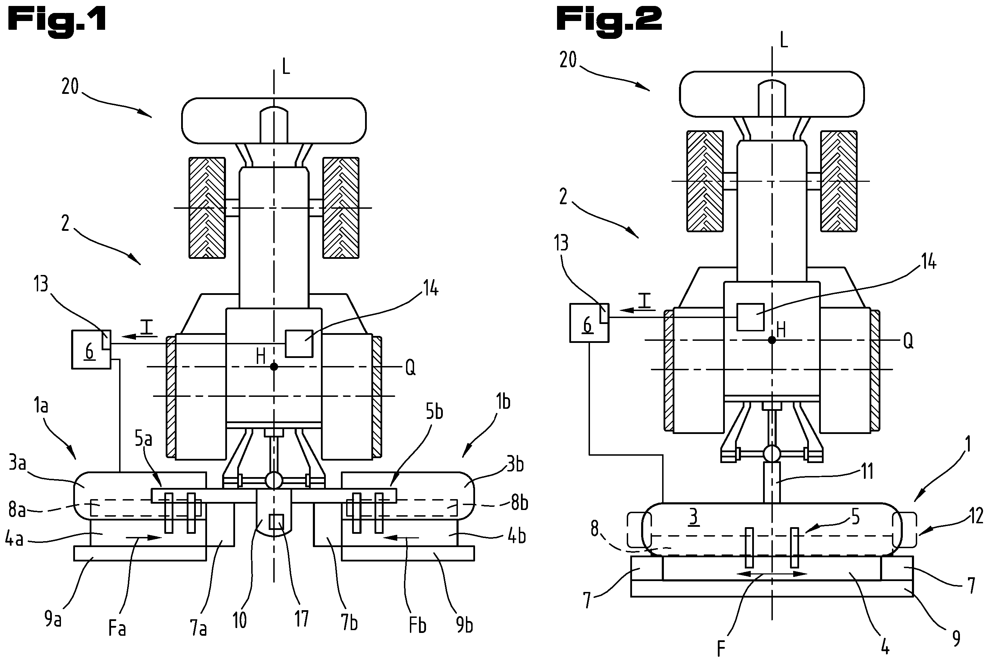

Fig.1 zeigt ein landwirtschaftliches Fahrzeug 2 mit einem (optionalen) Front-Mähwerk 20 und einer erfindungsgemäßen Mähkombination 1 einer beispielhaften ersten Ausführungsform in Draufsicht. Das landwirtschaftliche Fahrzeug 2 kann insbesondere ein Traktor sein.

In der dargestellten Ausführungsform weist die Mähkombination 1 zwei Mähwerke 3a, 3b auf, die zum Schneiden von Erntegut, beispielsweise Gras oder andere Futterpflanzen, ausgebildet sind. Die Mähwerke 3a, 3b können beispielsweise jeweils ein bekanntes Scheibenmähwerk oder Sichelmähwerk aufweisen. Derartige Mähwerke sind bekannt, weshalb an dieser Stelle keine nähere Beschreibung erfolgt. Die beiden Mähwerke 3a, 3b sind vorzugsweise identisch, könnte ggf. jedoch auch unterschiedlich ausgebildet sein.

Je Mähwerk 3a, 3b ist eine Fördereinheit 4a, 4b zum Fördern des geschnittenen Ernteguts in einer Förderrichtung Fa, Fb vorgesehen. Die Förderrichtungen Fa, Fb verlaufen im Betrieb quer, insbesondere im Wesentlichen orthogonal, zu einer Fahrzeug-Längsachse L des landwirtschaftlichen Fahrzeugs 2 bzw. im Wesentlichen parallel zu einer Fahrzeug-Querachse Q des Fahrzeugs 2. Die Förderrichtungen Fa, Fb der Fördereinheiten 4a, 4b sind vorzugsweise bestimmungsgemäß unveränderbar. Das bedeutet, dass die Förderrichtungen Fa, Fb im Betrieb nicht umkehrbar sind.

Für jede Fördereinheit 4a, 4b ist ferner eine Schwenkeinrichtung 5a, 5b vorgesehen, die dazu ausgebildet ist, die jeweilige Fördereinheit 4a, 4b relativ zum zugehörigen Mähwerk 3a, 3b zwischen einer Arbeitsposition und einer Bereitschaftsposition zu verschwenken. Die Arbeitsposition ist dabei so festgelegt, dass das geschnittene Erntegut des Mähwerks 3a, 3b gefördert werden kann, um eine Schwade am Ende der Fördereinheit 4a, 4b zu formen (nicht dargestellt). Die Bereitschaftsposition ist so festgelegt, dass das geschnittene Erntegut nicht gefördert werden kann. In der Bereitschaftsposition kann das geschnittene Erntegut somit im Wesentlichen über die gesamte Breite des jeweiligen Mähwerks 3a, 3b abgelegt werden.

Die Schwenkeinrichtungen 5a, 5b können beispielsweise dazu ausgebildet sein, die zugehörige Fördereinheit 4a, 4b im Betrieb um eine parallel zu einer Fahrzeug-Querachse Q des landwirtschaftlichen Fahrzeugs 2 liegende Schwenkachse zu verschwenken. Die Schwenkachse ist in Fig.1 strichpunktiert angedeutet.

Die Mähwerke 3a, 3b und die zugehörigen Fördereinheiten 4a, 4b sind im befestigten Zustand am Fahrzeug 6 so angeordneten, dass sich die Fahrzeug-Längsachse L des landwirtschaftlichen Fahrzeugs 2 zwischen den Mähwerken 3a, 3b und den zugehörigen Fördereinheiten 4a, 4b befindet. In Richtung der Fahrzeug-Querachse Q des Fahrzeugs 2 gesehen sind die Mähwerke 3a, 3b und die zugehörigen Fördereinheiten 4a, 4b von der Fahrzeug-Längsachse L beabstandet. Die Förderrichtungen Fa, Fb der beiden Fördereinheiten 4a, 4b zeigen in entgegengesetzte Richtungen und sind einander zugewandt. Der Abstand zwischen den Mähwerken 3a, 3b bzw. den zugehörigen Fördereinheiten 4a, 4b entspricht vorzugsweise in etwa einer Breite des optionalen Front-Mähwerks 20 (sofern vorhanden). Dadurch kann mit dem Front-Mähwerk 20 eine mittlere Schwade erzeugt werden und mittels der beiden Mähwerke 3a, 3b der Mähkombination 1 können zwei seitliche Schwade neben der mittleren Schwade erzeugt werden, wie nachfolgend noch erläutert wird.

In der dargestellten Ausführungsform in Fig.1 weist die Mähkombination 1 eine, vorzugsweise standardisierte, Aufhängung 10 zur aufgehängten Befestigung am landwirtschaftlichen Fahrzeug 2 auf. Die Mähkombination 1 kann dadurch auskragend und vom Boden beabstandet am Heck des Fahrzeugs 2 befestigt werden. Die Aufhängung 10 kann beispielsweise eine bekannte Drei-Punkt-Aufnahme aufweisen.

Ferner ist eine Steuerungseinheit 6 zur Steuerung der Mähkombination 1 vorgesehen. Die Steuerungseinheit 6 ist in Fig.1 schematisch angedeutet und kann an einer geeigneten Stelle der Mähkombination 1 angeordnet sein. Die Steuerungseinheit 6 kann in bekannter Weise eine geeignete Hardware und/oder Software aufweisen. Derartige Steuerungseinheiten sind im Stand der Technik bekannt. Im Rahmen der gegenständlichen Erfindung ist die Steuerungseinheit 6 dazu ausgebildet ist, die Mähkombination 1 in Abhängigkeit einer geographischen Information I in einem festgelegten Betriebsmodus zu betreiben. Der festgelegte Betriebsmodus kann beispielsweise ein selektives Aktivieren und Deaktivieren von Teilen der Mähkombination umfassen.

Die Steuerungseinheit 6 kann die Mähkombination 1, insbesondere die Mähwerke 3a, 3b, die Fördereinheiten 4a, 4b und die Schwenkeinrichtungen 5a, 5b beispielsweise in Abhängigkeit eines aktuellen Standorts selektiv aktivieren und deaktivieren. Dasselbe gilt auch für die nachfolgend noch näher beschriebenen (optionalen) Aufbereitungsvorrichtungen 8a, 8b und/oder Leiteinrichtungen 9a, 9b.

Beispielsweise kann die Steuerungseinheit 6 dazu ausgebildet sein, die Mähwerke 3a, 3b unabhängig voneinander in Abhängigkeit der geographischen Information I zu steuern, insbesondere selektiv zu aktivieren und deaktivieren und/oder die Fördereinheiten 4a, 4b unabhängig voneinander in Abhängigkeit der geographischen Information I zu steuern, insbesondere selektiv zu aktivieren und deaktivieren und/oder die Schwenkeinrichtungen 5a, 5b unabhängig voneinander in Abhängigkeit der geographischen Information I zu steuern, insbesondere selektiv zu aktivieren und deaktivieren. Dasselbe gilt auch für die nachfolgend noch näher beschriebenen Aufbereitungsvorrichtungen 8a, 8b und/oder Leiteinrichtungen 9a, 9b.

Die geographische Information I kann beispielsweise von einer Fahrzeug-Steuerungseinheit 14 des Fahrzeugs 2 an die Steuerungseinheit 6 der Mähkombination 1 übermittelt werden. Es wäre jedoch auch möglich, dass die Steuerungseinheit 6 der Mähkombination 1 in der Fahrzeug-Steuerungseinheit 14 des Fahrzeugs 2 implementiert ist.

Die Mähkombination 1 könnte auch ein (nicht dargestelltes) Sensorsystem zur Erfassung der geographischen Information aufweisen. Das Sensorsystem könnte beispielsweise eine oder mehrere geeignete Kamerasaufweisen und eine Auswerteeinheit umfassen, die dazu ausgebildet ist, aus den aufgenommenen Bildern der Kamera/s, die geographische Information I zu ermitteln. Das Sensorsystem könnte beispielsweise auch eine oder mehrere Drohnen mit jeweils einer Anzahl von Kameras umfassen. Die Drohne/n können im Betrieb oberhalb der Mähkombination 1 fliegen. Die Drohne/n könnten beispielsweise von der Steuerungseinheit 6 gesteuert werden. Beispielsweise könnten die verfügbaren Drohnen so gesteuert werden, dass sie sich immer im Bereich des Fahrzeugs 2 befinden oder ggf. dem Fahrzeug 2 in Fahrtrichtung vorauseilen.

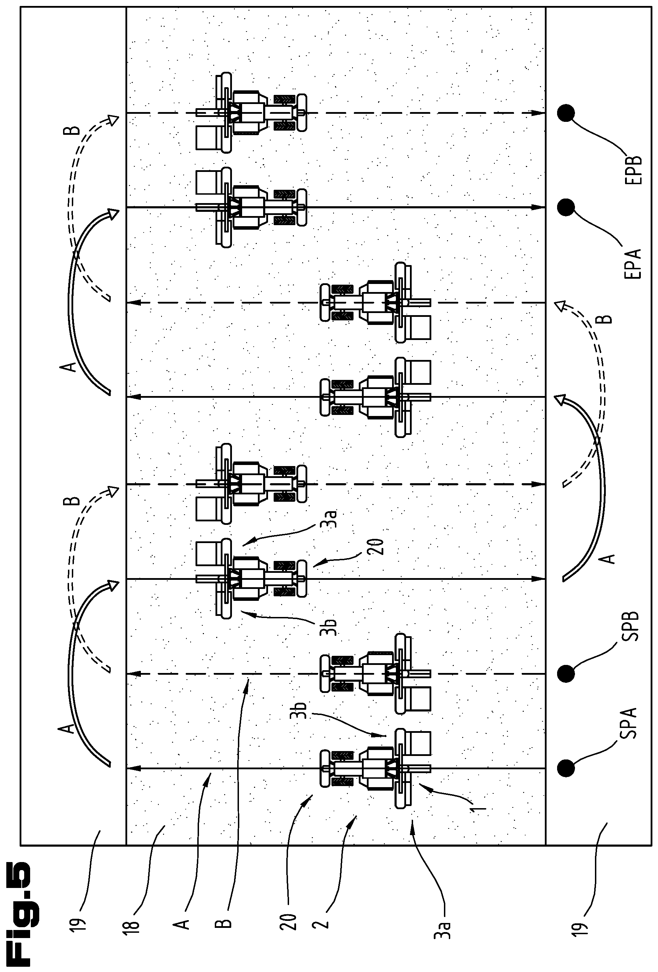

Die geographische Information I kann beispielsweise eine oder mehrere der folgenden Informationen umfassen: einen aktuellen Standort des Fahrzeugs 2, eine geplante Routenführung A, B des Fahrzeugs 2 (siehe Fig.5), eine Geländeinformation, eine Information über das Erntegut. Die geographische Information I kann beispielsweise auch eine Information über einen Wendevorgang enthalten und die Steuerungseinheit 6 kann dazu ausgebildet sein, die Mähkombination 1 während des Wendevorgangs zumindest teilweise zu deaktivieren. Insbesondere können beispielsweise die Mähwerke 3a, 3b und/oder Fördereinheiten 4a, 4b während des Wendevorgangs deaktiviert werden und/oder es können die Schwenkeinrichtungen 5a, 5b angesteuert werden, um die Fördereinheiten 4a, 4b während des Wendevorgangs automatisch in die Bereitschaftsposition zu verschwenken.

Die Information I über den Standort des Fahrzeugs 2 kann beispielsweise von einem Navigationssystem des Fahrzeugs 2 bereitgestellt werden oder ggf. auch von einem mobilen Endgerät, z.B. in Form von GPS-Daten. Die Information I über eine festgelegte bzw. geplante Routenführung des Fahrzeugs 2, insbesondere auch die Information I über den oder die Wendevorgange, kann z.B. von der Fahrzeug-Steuerungseinheit 14 des Fahrzeugs 2 bereitgestellt werden. Beispielsweise kann eine Routenführung vorab geplant und in der Fahrzeug-Steuerungseinheit 14 des Fahrzeugs 2 hinterlegt werden. Anhand der geplanten Routenführung kann die Steuerungseinheit 6 der Mähkombination 1 die Mähkombination 1 entsprechend steuern.

Die Geländeinformation kann beispielsweise anhand einer in der Steuerungseinheit 6 hinterlegten Applikationskarte einer landwirtschaftlichen Fläche ermittelt werden. Mit einer Applikationskarte können landwirtschaftliche Flächen je nach Bedarf des Bodens und der Pflanze in verschiedene Bearbeitungszonen eingeteilt werden. Diese Teilflächen können dann spezifisch - also ihren individuellen Anforderungen entsprechend - bearbeitet werden, um den Einsatz von Betriebsmitteln zu reduzieren, Kosten zu sparen, die Umwelt zu schonen und die Erträge zu optimieren. Die Geländeinformation kann auch eine topographische Information wie beispielsweise eine Hangneigung enthalten. Entsprechend der Hangneigung kann die Mähkombination 1 gesteuert werden.

Die Information über das Erntegut kann beispielsweise aus einer in der Steuerungseinheit 6 hinterlegten Ackerschlagkartei ermittelt werden. Darin können beispielsweise eine Futterart, eine Bestandshöhe, ein Erntezustand, usw. enthalten sein. Es könnte beispielsweise sein, dass Feldfutter wie Luzerne oder Raygras anders zu behandeln sind als Wiesengras.

Die Steuerungseinheit 6 kann eine geeignete Kommunikationsschnittstelle 13 aufweisen und über eine geeignete Kommunikationsverbindung mit der Fahrzeug-Steuerungseinheit 14 des landwirtschaftlichen Fahrzeugs 2 verbunden werden. Die Mähkombination 1 kann beispielsweise auch zumindest teilweise über die Fahrzeug-Steuerungseinheit 14 gesteuert werden. Beispielsweise kann das Fahrzeug 2 über eine Bedieneinheit verfügen und ein Bediener kann alle Funktionen oder Teile der Funktionen der der Mähkombination 1 über die Bedieneinheit steuern. Im dargestellten Beispiel ist die Kommunikationsschnittstelle 13 drahtgebunden und über eine geeignete Kommunikationsleitung mit der Fahrzeug-Steuerungseinheit 14 des landwirtschaftlichen Fahrzeugs 2 verbunden. Gängige Kommunikationsstandards sind beispielsweise ISOBUS oder CAN-Bus. Zusätzlich oder alternativ wäre jedoch auch eine drahtlose Kommunikationsschnittstelle 13 denkbar, z.B. WLAN, Bluetooth, o.ä.

Die Mähkombination 1 kann einen hydraulischen Antrieb umfassen, der dazu ausgebildet ist, vom landwirtschaftlichen Fahrzeug 2 mit Antriebsenergie versorgt zu werden. Der hydraulische Antrieb kann hierbei einen offenen Hydraulikkreis aufweisen, der mit einem Hydraulikkreis des landwirtschaftlichen Fahrzeugs 2 gekoppelt werden kann. Die Kopplung kann beispielsweise über eine geeignete Hydraulikkupplung erfolgen. Der Antrieb einzelner Aggregate der Mähkombination 1, beispielsweise der verfügbaren Mähwerke 3a, 3b, Fördereinheiten 4a, 4b, Schwenkeinrichtungen 5a, 5b, usw., kann über geeignete hydraulische Aktuatoren, z.B. Hydraulikmotoren, Hydraulikzylinder, usw. erfolgen. Ferner kann der hydraulische Antrieb eine oder mehrere elektrisch ansteuerbare Ventile aufweisen, die von der Steuerungseinheit 6 ansteuerbar sind.

Alternativ könnte der hydraulische Antrieb jedoch auch einen geschlossenen Hydraulikkreis mit zumindest einer Hydraulikpumpe aufweisen, die von einem mechanischen Abtrieb, z.B. einer Zapfwelle, des landwirtschaftlichen Fahrzeugs 2 antreibbar ist. Dadurch kann die Gefahr von Leckage verringert werden.

Alternativ oder zusätzlich kann die Mähkombination 1 auch einen elektrischen Antrieb umfassen, der vom landwirtschaftlichen Fahrzeug 2 mit elektrischer Antriebsenergie versorgt werden kann. Der Antrieb einzelner Aggregate der Mähkombination 1, beispielsweise der verfügbaren Mähwerke 3a, 3b, Fördereinheiten 4a, 4b, Schwenkeinrichtungen 5a, 5b, usw., kann über geeignete elektromechanische Aktuatoren, z.B. Elektromotoren, Linearmotoren, o.ä., erfolgen. Natürlich wäre auch eine Kombination von hydraulischem Antrieb und elektrischem Antrieb denkbar. Beispielsweise könnten ein oder mehrere Aggregate hydraulisch angetrieben sein und ein oder mehrere Aggregate elektrisch.

Die Fördereinheiten 4a, 4b umfassen vorzugsweise jeweils einen geeigneten Stetigförderer. Der Stetigförderer kann beispielsweise einen Bandförderer, Kettenförderer oder einen Schraubenförderer umfassen. Je nach Anwendungsgebiet kann der Fachmann eine geeignete Ausführung wählen.

An den Mähwerken 3a, 3b kann jeweils eine Aufbereitungsvorrichtung 8a, 8b für geschnittenes Erntegut vorgesehen sein. Die Aufbereitungsvorrichtung 8a, 8b kann beispielsweise als bekannter Zinkenaufbereiter oder bekannter Walzenaufbereiter ausgebildet sein. Die Aufbereitungsvorrichtungen 8a, 8b sind von der Steuerungseinheit 6 ansteuerbar. Vorzugsweise ist die Steuerungseinheit 6 wiederum dazu ausgebildet, die Aufbereitungsvorrichtungen 8a, 8b in Abhängigkeit der geographischen Information I, anzusteuern.

Ferner können die Mähwerke 3a, 3b eine verstellbare Leiteinrichtung 9a, 9b zum Leiten des mittels der Aufbereitungsvorrichtung 8a, 8b aufbereiteten Ernteguts umfassen. Wenn keine Aufbereitungsvorrichtung 8a, 8b vorgesehen ist, dann könnten die Leiteinrichtung 9a, 9b auch direkt zum Leiten des mittels des Mähwerks 3a, 3b geschnittenen Ernteguts ausgebildet sein. Die Leiteinrichtungen 9a, 9b können beispielsweise verstellbare Leitschaufeln umfassen, die mittels eines geeigneten Aktuators von der Steuerungseinheit 6 verstellt werden können (nicht dargestellt). Der Aktuator könnte beispielsweise elektrisch oder hydraulisch ausgebildet sein, z.B. eine Anzahl von Hydraulikzylinder umfassen, die Teil des hydraulischen Antriebs der Mähkombination 1 sein können. Vorzugsweise ist die Steuerungseinheit 6 dazu ausgebildet, die Leiteinrichtungen 9a, 9b abhängig von der geographischen Information I zu verstellen.

In der dargestellten Ausführung ist für die Fördereinheiten 4a, 4b zudem jeweils eine Auswurfeinrichtung 7a, 7b zum Auswerfen von gefördertem Erntegut vorgesehen. Die Auswurfeinrichtungen 7a, 7b sind in Förderrichtung Fa, Fb gesehen an die jeweilige Fördereinheit 4a, 4b anschließend angeordnet. Die Auswurfeinrichtungen 7a, 7b sind von der Steuerungseinheit 6, vorzugsweise unabhängig von der zugehörigen Fördereinheit 4a, 4b ansteuerbar. Das bedeutet, dass die Auswurfeinrichtungen 7a, 7b bei aktivierten Fördereinheiten 4a, 4b ggf. auch deaktiviert sein können (und umgekehrt). Vorzugsweise sind die Auswurfeinrichtungen 7a, 7b wiederum in Abhängigkeit der geographischen Information I (z.B. Standort des Fahrzeugs 2) ansteuerbar, insbesondere selektiv aktivierbar/deaktivierbar.

Die Mähkombination 1 kann einen geeigneten Verstaumechanismus 17 umfassen, der dazu ausgebildet ist, die Mähwerke 3a, 3b inkl. der Fördereinheiten 4a, 4b relativ zur Aufhängung 10 von einer Betriebsposition in eine Transportposition zu verlagern. Die Steuerungseinheit 6 kann dazu ausgebildet sein, den Verstaumechanismus 17 in Abhängigkeit der geographischen Information I anzusteuern. Die Fördereinheiten 4 sind in der Transportposition vorzugsweise so angeordnet, dass die Förderrichtung F im Wesentlichen parallel zu einer Fahrzeug-Hochachse H des landwirtschaftlichen Fahrzeugs 2 ausgerichtet ist. Der Verstaumechanismus 17 kann beispielsweise einen geeigneten elektrischen oder hydraulischen Aktuator aufweisen. Der Aktuator könnte z.B. eine Anzahl von Hydraulikzylindern umfassen, die Teil des hydraulischen Antriebs der Mähkombination sein können.

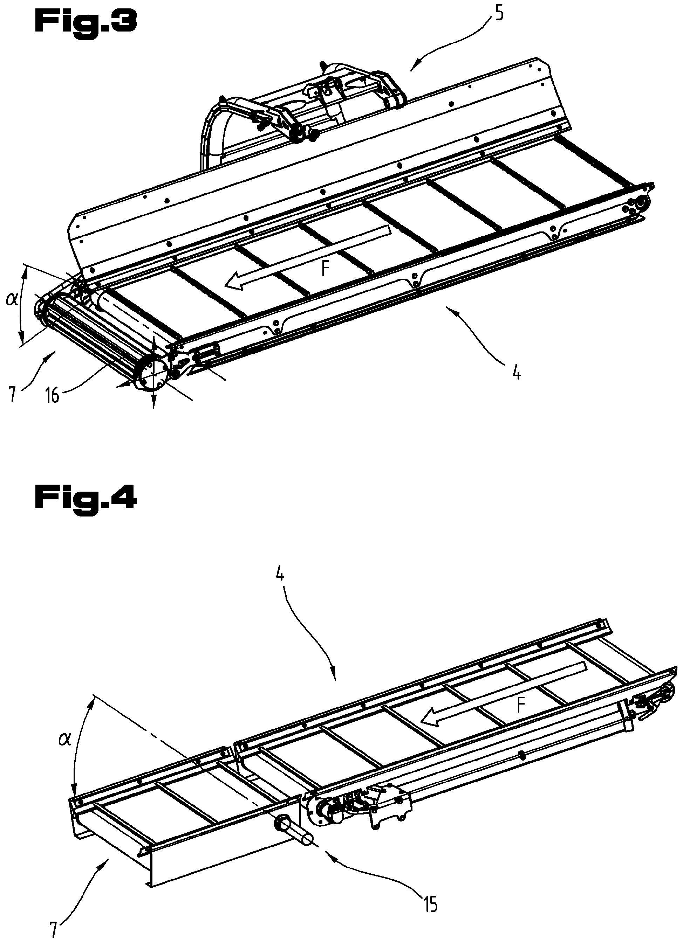

Fig.3 zeigt eine beispielhafte Fördereinheit 4 mit einer Auswurfeinrichtung 7 einer beispielhaften ersten Ausführungsform in perspektivischer Ansicht. Die in Fig.3 dargestellte Auswurfeinrichtung 7 weist eine angetriebene Profilrolle 16 auf, die um eine quer zur Förderrichtung F verlaufende Drehachse drehbar ist. Die Drehachse ist strichpunktiert angedeutet. Die Profilrolle 16 kann beispielsweise von einem Elektromotor angetrieben sein oder ggf. auch von einem Hydraulikmotor des hydraulischen Antriebs der Mähkombination 1. Die Steuerungseinheit 6 kann dazu ausgebildet sein, eine Drehzahl der Profilrolle 16 zu steuern. Durch die Drehzahl kann die Auswurfweite des Ernteguts verändert werden. Vorzugsweise ist die Drehzahl der Profilrolle 16 unabhängig von einer Fördergeschwindigkeit der Fördereinheit 4 steuerbar. Die Steuerungseinheit 6 kann ggf. auch dazu ausgebildet sein, die Drehzahl der Profilrolle 16 abhängig von der geographischen Information I zu steuern. Dadurch kann die Auswurfweite automatisiert ortsabhängig verändert werden.

Die Profilrolle 16 kann relativ zur Fördereinheit 4 verstellbar sein. Dadurch kann ein Höhenversatz eingestellt werden, wodurch ein Auswurfwinkel des Ernteguts veränderbar ist. Alternativ oder zusätzlich könnte dadurch auch ein Abstand zwischen Profilrolle 16 und Fördereinheit 4 verstellbar sein. Die Profilrolle 16 kann beispielsweise um eine am Ende der Fördereinheit 4 befindliche und im Wesentlichen parallel zur Drehachse der Profilrolle 16 ausgerichtete Schwenkachse relativ zur Fördereinheit 4 verschwenkbar sein.

Alternativ könnte auch eine Linearführung oder eine andere vorgegebene Führungsbahn zur, insbesondere translatorischen, Verstellung der Profilrolle 16 vorgesehen sein. Beispielsweise könnte eine translatorische Verstellbarkeit parallel zur Förderrichtung F vorgesehen sein, um den Abstand zwischen Profilrolle 16 und Fördereinheit 4 zu verstellen. Alternativ oder zusätzlich könnte beispielsweise auch eine translatorische Verstellbarkeit in einer Richtung normal zur Förderrichtung F und normal zur Drehachse vorgesehen sein, um einen Höhenversatz zwischen Profilrolle 16 und Fördereinheit 4 zu verstellen. Durch den Höhenversatz kann der Auswurfwinkel des Ernteguts verändert werden.

Optional kann die Profilrolle 16 ggf. auch selektiv von einer aktiven Stellung (wie in Fig.3 dargestellt) in eine inaktive Stellung (nicht dargestellt), in der sie sich außerhalb eines Wurfbereiches der Fördereinheit 4 befindet, verlagerbar sein. Dadurch kann ein Aktivieren bzw. Deaktivieren der Auswurfeinrichtung 7 durchgeführt werden.

Fig.4 zeigt eine Fördereinheit 4 mit einer Auswurfeinrichtung 7 einer beispielhaften zweiten Ausführungsform in perspektivischer Ansicht. Die in Fig.4 dargestellte Auswurfeinrichtung 7 weist einen Stetigförderer in Form eines Förderbandes auf. Das Förderband kann beispielsweise wiederum von einem Elektromotor angetrieben sein oder ggf. auch von einem Hydraulikmotor des hydraulischen Antriebs der Mähkombination 1. Die Steuerungseinheit 6 kann dazu ausgebildet sein, eine Fördergeschwindigkeit des Förderbandes zu steuern. Durch die Drehzahl kann die Auswurfweite des Ernteguts verändert werden. Vorzugsweise ist die Fördergeschwindigkeit des Förderbandes unabhängig von einer Fördergeschwindigkeit der Fördereinheit 4 steuerbar. Die Steuerungseinheit 6 kann ggf. auch dazu ausgebildet sein, die Fördergeschwindigkeit des Förderbandes abhängig von der geographischen Information I zu steuern. Dadurch kann die Auswurfweite beispielsweise automatisiert ortsabhängig verändert werden.

Die in Fig.4 dargestellte Auswurfeinrichtung 7 weist zudem eine Schwenkeinheit 15 zur Veränderung eines Auswurfwinkel α des Ernteguts auf. Die Schwenkeinheit 15 ist von der Steuerungseinheit 6, vorzugsweise unabhängig von einem Antrieb der Auswurfeinrichtung 7, ansteuerbar. Im gezeigten Beispiel kann das Förderband der Auswurfeinrichtung 7 um eine quer zur Förderrichtung F der Fördereinheit 4 verlaufende Schwenkachse verschwenkt werden, um den Auswurfwinkel α zu verstellen. Der Auswurfwinkel α ist in Fig.4 angedeutet. Durch Veränderung des Auswurfwinkels α (zusätzlich oder alternativ zur Veränderung der Fördergeschwindigkeit) kann die Auswurfweite beeinflusst werden. Die Steuerungseinheit 6 kann ggf. auch dazu ausgebildet sein, die Schwenkeinheit 15 der Auswurfeinrichtung 7 abhängig von der geographischen Information I zu steuern. Dadurch kann der Auswurfwinkel beispielsweise automatisiert ortsabhängig verändert werden.

Bei einer starken Kurvenfahrt (die z.B. über ein Lenksignal des Fahrzeugs 2 ermittelt werden kann) kann es vorteilhaft sein, wenn die kurvenäußere Auswurfeinrichtung 7a, 7b so angesteuert wird, dass eine höhere Auswurfweite erzielt wird als mit der kurveninneren Auswurfeinrichtung 7a, 7b. Dadurch kann das Erntegut auch bei Kurvenfahrt möglichst mittig am mittleren Schwad des Front-Mähwerks 20 abgelegt werden.

Bei starker Hangneigung kann es ferner vorteilhaft sein, wenn die Schwenkeinheit 15 der talseitigen Auswurfeinrichtung 7a, 7b so angesteuert wird, dass ein größerer Auswurfwinkel α eingestellt wird als bei der bergseitigen Auswurfeinrichtung 7a, 7b.

Dadurch kann das Erntegut wiederum auch bei starker Hangneigung möglichst mittig auf dem am mittleren Schwad des Front-Mähwerks 20 abgelegt werden.

Anhand von Fig.2 wird nachfolgend eine erfindungsgemäße Mähkombination 1 einer beispielhaften zweiten Ausführungsform beschrieben. Fig.2 zeigt ein landwirtschaftliches Fahrzeug mit einem Font-Mähwerk 20 und einer Mähkombination 1 in Draufsicht. Um Wiederholungen zu vermeiden, werden lediglich die wesentlichen Unterschiede zur ersten ausführungsform beschrieben. Hinsichtlich der gemeinsamen Merkmale wird auf die obigen Ausführungen verwiesen, die in analoger Weise auch für die zweite ausführungsform der Mähkombination 1 gültig sind.

Im Gegensatz zur ersten Ausführungsform umfasst die dargestellte Mähkombination 1 ein Fahrwerk 12 und eine Zugeinrichtung 11, die mit dem landwirtschaftlichen Fahrzeug 2 koppelbar bzw. gekoppelt ist. Die Zugeinrichtung 11 kann beispielsweise eine Zugstange umfassen, die eine Kupplung aufweist, die dazu geeignet ist, mit einer Kupplung des Fahrzeugs 2, insbesondere bestimmungsgemäß lösbar, gekoppelt zu werden. Dadurch kann die Mähkombination 1 in der Art eines Anhängers vom Fahrzeug 2 gezogen werden. Das Fahrwerk 12 kann eine nicht angetriebene Achse mit zwei Rädern umfassen. Optional könnte auch ein Hilfsantrieb zum Antrieb der Achse vorgesehen sein, der beispielsweise Teil des hydraulischen Antriebs der Mähkombination 1 sein kann. Die Zugeinrichtung 11, insbesondere Zugstange, weist in Fig.2 aus Platzgründen eine relativ geringe Länge auf. In der Praxis kann die Länge natürlich größer sein und beispielsweise bis zu mehreren Metern betragen.

Die Mähkombination 1 weist erneut ein Mähwerk 3 und eine dem Mähwerk 3 zugeordnete Fördereinheit 4 auf, die mittels einer Schwenkeinrichtung 5 relativ zum Mähwerk 3 verschwenkbar ist. Ferner kann die Mähkombination 1 wiederum eine Auswurfeinrichtung 7 und/oder eine verstellbare Leiteinrichtung 9 und/oder eine Aufbereitungseinrichtung 8 umfassen. Hinsichtlich der konkreten Ausführung wird auf die Beschreibung zur ersten Ausführungsform verwiesen.

Im Unterschied zur ersten Ausführungsform kann die Förderrichtung F der Fördereinheit 4 ggf. umkehrbar sein, wie durch den Doppelpfeil in Fig.2 angedeutet ist. Die Steuerungseinheit 6 kann beispielsweise dazu ausgebildet sein, die Förderrichtung F zu verändern bzw. umzuschalten. Beispielsweis könnte die Förderrichtung F in Abhängigkeit der erhaltenen geographischen Information I automatisiert angepasst werden. Wenn die Förderrichtung F umkehrbar ist, dann ist es vorteilhaft, wenn an beiden Enden der Fördereinheit 4 in Förderrichtung F gesehen jeweils eine Auswurfeinrichtung 7 vorgesehen ist, wie in Fig.2 dargestellt ist. Die Auswurfeinrichtung/en 7 kann/können wiederum so ausgebildet sein, wie anhand von Fig.3 und Fig.4 beschrieben wurde. Bei bestimmungsgemäß nicht veränderbarer Förderrichtung F wäre eine Auswurfeinrichtung 7 ausreichend.

Die Mähkombination 1 kann ggf. auch wiederum einen geeigneten (nicht dargestellten) Verstaumechanismus 17 umfassen, der dazu ausgebildet ist, das Mähwerk 3 inkl. der Fördereinheit 4 relativ zum Fahrwerk 12 von einer Betriebsposition in eine Transportposition zu verlagern. Die Steuerungseinheit 6 kann dazu ausgebildet sein, den Verstaumechanismus 17 in Abhängigkeit der geographischen Information I anzusteuern.

Ferner kann es vorteilhaft sein, wenn die Zugeinrichtung 11 dazu ausgebildet ist, die Mähkombination 1 im Betrieb mit einem seitlichen Versatz zum landwirtschaftlichen Fahrzeug 2 zu ziehen. Dadurch kann die Mähkombination 1 beispielsweise links oder rechts der Fahrzeug-Längsachse L gezogen werden. Die Förderrichtung F ist dabei vorzugsweise umschaltbar, sodass das Erntegut jeweils zur Mitte, d.h. zur Fahrzeug-Längsachse L, gefördert werden kann. Wenn das Fahrzeug 2 ein Front-Mähwerk umfasst, kann der seitliche Versatz der Mähkombination 1 beispielsweise so festgelegt sein, dass das Erntegut in Richtung des vom Front-Mähwerk 20 erzeugten mittleren Schwads gefördert werden kann.

Optional könnte die Zugeinrichtung 11 auch eine (nicht dargestellte) Lenkvorrichtung umfassen, die dazu ausgebildet ist, die Mähkombination 1 in eine erste Versatzposition zu lenken, die sich im Betrieb rechts der Fahrzeug-Längsachse L befindet und in eine zweite Versatzposition zu lenken, die sich im Betrieb links der Fahrzeug-Längsachse L befindet (nicht dargestellt). Auch weitere Versatzpositionen könnten festgelegt sein, beispielsweise mit verschiedenen Abständen von der Fahrzeug-Längsachse L.

Die Steuerungseinheit 6 kann ferner dazu ausgebildet sein, die Lenkvorrichtung derart anzusteuern, dass die Mähkombination 1 abhängig von der geographischen Information I in eine der Versatzpositionen lenkbar ist. Dadurch kann die Mähkombination 1 z.B. ortsabhängig, beispielsweise nach dem Wenden des Fahrzeugs 2 am Vorgewende 19 (siehe Fig.5), automatisch, d.h. ohne manuellen Eingriff des Bedieners, von der ersten Versatzposition in die zweite Versatzposition gelenkt werden (oder umgekehrt). Dabei ist es vorteilhaft, wenn auch die Förderrichtung der Fördereinheit 4 entsprechend mit angepasst wird, sodass die Förderrichtung F jeweils zur Mitte, d.h. zur Fahrzeug-Längsachse L, zeigt.

Die Lenkvorrichtung könnte beispielsweise einen ersten Schwenkantrieb umfassen, der im Bereich eines ersten Endes der Zugeinrichtung 11 vorgesehen ist, welches zur Kopplung mit dem Fahrzeug 2, insbesondere einer Deichsel, dient. Der erste Schwenkantrieb kann dazu ausgebildet sein, die Zugeinrichtung 11 relativ zum Fahrzeug 2 zu verschwenken, insbesondere um eine parallel zur Fahrzeug-Hochachse H liegende Schwenkachse. Ferner könnte die Lenkvorrichtung einen zweiten Schwenkantrieb umfassen, der im Bereich eines zweiten Endes der Zugeinrichtung 11 vorgesehen ist, welches mit der Mähkombination 1 verbunden oder verbindbar ist. Der zweite Schwenkantrieb kann dazu ausgebildet sein, die Mähkombination 1 relativ zur Zugeinrichtung 11 zu verschwenken, insbesondere um eine parallel zur Fahrzeug-Hochachse H liegende Schwenkachse.

Die Schwenkantriebe können beispielsweise jeweils ein Schwenkgetriebe, einen hydraulischen Aktuator, einen elektrischen Aktuator, usw. umfassen. Der erste Schwenkantrieb kann von der Steuerungseinheit 6 angesteuert werden, um die Zugeinrichtung 11 relativ zum Fahrzeug 6 auszulenken und in Folge die Mähkombination 1 in die gewünschte Versatzposition zu lenken. Der zweite Schwenkantrieb kann von der Steuerungseinheit 6 so angesteuert werden, dass die Mähkombination 1 auch im ausgelenkten Zustand im Wesentlichen parallel zur Fahrzeug-Längsachse L des Fahrzeugs 2 ausgerichtet ist.

Anhand von Fig.5 wird nachfolgend ein beispielhaftes Verfahren zum Betreiben eines landwirtschaftlichen Fahrzeugs 2 beschrieben, an dessen Front ein (optionales) Front-Mähwerk 20 angeordnet ist und an dessen Heck eine erfindungsgemäße Mähkombination 1 angeordnet ist. Die Mähkombination 1 kann beispielhaft so ausgebildet sein, wie anhand von Fig.1 beschrieben wurde. Fig.5 zeigt eine beispielhafte landwirtschaftliche Fläche 18 mit (nicht dargestelltem) Erntegut in einer Draufsicht. Die landwirtschaftliche Fläche 18 ist hier beispielhaft rechteckig und ist ihren langen Seiten jeweils durch ein Vorgewende 19 begrenzt. Das Vorgewende 19 dient zum Wenden des Fahrzeugs 2 und weist in der Regel kein Erntegut auf. Das Erntegut kann mittels der Mähkombination 1 des Fahrzeugs 2 gemäht und vorzugsweise zu Schwaden geformt werden. Die Schwaden sind jeweils hinter der Mähkombination 1 angedeutet.

In Fig.5 sind zwei beispielhafte Routenführungen A, B dargestellt. Die Routenführungen können beispielsweise vor Beginn der Fahrt ausgewählt oder festgelegt werden, beispielsweise über eine Bedieneinheit im Fahrzeug 2, die mit der Fahrzeug-Steuerungseinheit 14 verbunden ist. Die erste Routenführung A ist in durchgezogener Linie dargestellt und verläuft hier von einem Startpunkt SPA zu einem Endpunkt EPA. Die zweite Routenführung B ist in gestrichelter Linie dargestellt und verläuft hier von einem Startpunkt SPB zu einem Endpunkt EPB. Die Routenführungen A, B weisen jeweils mehrere gerade Streckenabschnitte auf, die im Wesentlichen parallel zu den kurzen Seiten der landwirtschaftlichen Fläche 18 verlaufen. Zudem weisen die Routenführungen A, B jeweils im Bereich der Vorgewende 19 Kurvenabschnitte auf, welche die geraden Streckenabschnitte verbinden. Das Fahrzeug 2 kann beispielsweise in einer ersten Fahrt die erste Routenführung A zwischen dem Startpunkt SPA und dem Endpunkt EPA abfahren. In einer zweiten Fahrt kann das Fahrzeug 2 die zweite Routenführung B zwischen dem Startpunkt SPB und dem Endpunkt EPB abfahren. An dieser Stelle sei angemerkt, dass die dargestellte Routenführung nur beispielhaft zu verstehen ist und dass natürlich auch andere Routenführungen denkbar wären.

Vor oder während der Fahrt kann eine geographische Information I an die Steuerungseinheit 6 übermittelt werden. Während der Fahrt kann die Steuerungseinheit 6 dann die Mähkombination 1 in Abhängigkeit der erhaltenen Information I steuern. Die Information I kann beispielsweise von der Fahrzeug-Steuerungseinheit 14 (siehe Fig.1) an die Steuerungseinheit 6 der Mähkombination 1 übermittelt werden. Dies kann beispielsweise über drahtlose oder drahtgebunden erfolgen, wie bereits beschrieben wurde. Wie bereits ausführlich beschrieben wurde, kann die geographische Information I beispielsweise einen aktuellen Standort des Fahrzeugs 2, eine geplante Routenführung A, B des Fahrzeugs 2, eine Geländeinformation oder eine Information über das Erntegut umfassen. Der Standort kann z.B. anhand eines GPS-Signals oder anhand von Koordinaten der geplante Routenführung A, B des Fahrzeugs 2 ermittelt werden. Die Information I könnte alternativ auch von einem mobilen Endgerät übermittelt werden, das der Bediener des Fahrzeugs 2 während der Fahrt mit sich führt.

Die Information I kann hingegen auch bereits in der Fahrzeug-Steuerungseinheit 14 oder der Steuerungseinheit 6 der Mähkombination 1 hinterlegt sein und die Steuerungseinheit 6 kann die Mähkombination 1 abhängig davon steuern. Beispielsweise könnte die Routenführung A, B hinterlegt sein und die Steuerungseinheit 6 kann anhand der von der Fahrzeug-Steuerungseinheit 14 erhaltenen Fahrdaten (z.B. Geschwindigkeit, Lenkwinkel, usw.) ermitteln, wo sich die Mähkombination 1 gerade auf der jeweiligen Routenführung A, B befindet und abhängig davon einen geeigneten Betriebsmodus wählen.

Im dargestellten Beispiel kann die Steuerungseinheit 6 am ersten geraden Streckenabschnitt nach dem Startpunkt SPA beispielsweise das Front-Mähwerk 20 aktivieren, wodurch ein mittlerer Schwad S gebildet werden kann. Ferner kann die Steuerungseinheit 6 das in Fahrtrichtung gesehen linke Mähwerk 3a (siehe Fig.1) und die zugehörige Fördereinheit 4 der Mähkombination 1 aktivieren, wobei die Schwenkeinrichtung 5a so angesteuert wird, dass sich die Fördereinheit 4a in der Arbeitsposition befindet. Dadurch kann das mittels des linken Mähwerks 3a geschnittene Erntegut in Förderrichtung Fa (Fig.1) zum mittleren Schwad gefördert werden. Zudem kann die Steuerungseinheit 6 das in Fahrtrichtung gesehen rechte Mähwerk 3b (siehe Fig.1) aktivieren und die zugehörige Fördereinheit 4b der Mähkombination 1 deaktivieren, wobei die Schwenkeinrichtung 5b vorzugsweise so angesteuert wird, dass sich die Fördereinheit 4b in der Bereitschaftsposition befindet. Dadurch kann das mittels des rechten Mähwerks 3b geschnittene Erntegut in Form eines rechten Schwads abgelegt werden, der sich im Wesentlichen über die gesamte Breite des rechten Mähwerks 3b erstreckt.

Im Bereich der ersten Kurvenfahrt am oberen Vorgewende 19 (siehe Fig.5 durchgezogener Pfeil oben links) kann die Steuerungseinheit 6 aufgrund der erhaltenen Information I automatisch die gesamte Mähkombination 1 deaktivieren und ggf. auch das Front-Mähwerk 20 deaktivieren. Der Bediener kann nun das Fahrzeug 2 am Vorgewende 19 entsprechend des Pfeils wenden und in Richtung des nachfolgenden zweiten geraden Streckenabschnitts lenken, ohne die Mähkombination 1 (und ggf. das Front-Mähwerk 20) manuell bedienen zu müssen.

Danach kann die Steuerungseinheit 6 am zweiten geraden Streckenabschnitt nach der ersten Wende beispielsweise das Front-Mähwerk 20 wieder automatisch aufgrund der erhaltenen Information I aktivieren, wodurch erneut ein mittlerer Schwad S gebildet werden kann. Ferner kann die Steuerungseinheit 6 zugleich das in Fahrtrichtung gesehen linke Mähwerk 3a aktivieren und die zugehörige Fördereinheit 4a der Mähkombination 1 deaktivieren, wobei die Schwenkeinrichtung 5a vorzugsweise so angesteuert wird, dass sich die Fördereinheit 4a in der Bereitschaftsposition befindet. Dadurch kann das mittels des linken Mähwerks 3a geschnittene Erntegut in Form eines linken Schwads abgelegt werden, der sich im Wesentlichen über die gesamte Breite des linken Mähwerks 3a erstreckt. Zudem kann die Steuerungseinheit 6 zugleich das in Fahrtrichtung gesehen rechte Mähwerk 3b und die zugehörige Fördereinheit 4b der Mähkombination 1 aktivieren, wobei die Schwenkeinrichtung 5b so angesteuert wird, dass sich die Fördereinheit 4b in der Arbeitsposition befindet. Dadurch kann das mittels des rechten Mähwerks 3b geschnittene Erntegut in Förderrichtung Fb (Fig.1) zum mittleren Schwad gefördert werden.

In analoger Weise kann die Fahrt entlang der Routenführung A bis zum Endpunkt EPA fortgesetzt werden. Nach Beendigung der Fahrt entlang der Routenführung A kann das Fahrzeug 2 zum Startpunkt SPB der Routenführung B bewegt werden und die Routenführung B kann gestartet werden. Alternativ könnte die Routenführung B natürlich auch durch ein weiteres Fahrzeug 2 befahren werden, entweder gleichzeitig oder sequentiell zur ersten Routenführung A.

Wie in Fig.5 dargestellt ist, kann es vorteilhaft sein, wenn die Betätigung der Mähkombination 1 auf der zweiten Routenführung B gegengleich zur Betätigung auf der ersten Routenführung A erfolgt. Das bedeutet, dass die Steuerungseinheit 6 am ersten geraden Streckenabschnitt nach dem Startpunkt SPB das Front-Mähwerk 20 aktivieren kann, wodurch wiederum ein mittlerer Schwad S gebildet werden kann. Ferner kann die Steuerungseinheit 6 das in Fahrtrichtung gesehen linke Mähwerk 3a (siehe Fig.1) aktivieren und die zugehörige Fördereinheiten 4 der Mähkombination 1 deaktivieren, wobei die Schwenkeinrichtung 5 vorzugsweise so angesteuert wird, dass sich die Fördereinheit 4 in der Bereitschaftsposition befindet. Dadurch kann das mittels des linken Mähwerks 3a geschnittene Erntegut in Form eines linken Schwads abgelegt werden, der sich im Wesentlichen über die gesamte Breite des linken Mähwerks 3a erstreckt. Zudem kann die Steuerungseinheit 6 das in Fahrtrichtung gesehen rechte Mähwerk 3b (siehe Fig.1) und die zugehörige Fördereinheit 4b der Mähkombination 1 aktivieren, wobei die Schwenkeinrichtung 5b so angesteuert wird, dass sich die Fördereinheit 4b in der Arbeitsposition befindet. Dadurch kann das mittels des rechten Mähwerks 3b geschnittene Erntegut in Förderrichtung Fb zum mittleren Schwad gefördert werden.

Im Bereich der ersten Kurvenfahrt am oberen Vorgewende 19 (siehe Fig.5 gestrichelter Pfeil oben links) kann die Steuerungseinheit 6 aufgrund der geographischen Information I automatisch die gesamte Mähkombination 1 deaktivieren und ggf. auch das Front-Mähwerk 20 deaktivieren. Der Bediener kann nun das Fahrzeug 2 am Vorgewende 19 entsprechend des Pfeils wenden und in Richtung des nachfolgenden zweiten geraden Streckenabschnitts lenken, ohne die Mähkombination 1 (und ggf. das Front-Mähwerk 20) manuell bedienen zu müssen.

Danach kann die Steuerungseinheit 6 am zweiten geraden Streckenabschnitt nach der ersten Wende beispielsweise das Front-Mähwerk 20 wieder automatisch aufgrund der geographischen Information I aktivieren, wodurch erneut ein mittlerer Schwad S gebildet werden kann. Ferner kann die Steuerungseinheit 6 zugleich das in Fahrtrichtung gesehen linke Mähwerk 3a und die zugehörige Fördereinheit 4a der Mähkombination 1 aktivieren, wobei die Schwenkeinrichtung 5a so angesteuert wird, dass sich die Fördereinheit 4a in der Arbeitsposition befindet. Dadurch kann das mittels des linken Mähwerks 3a geschnittene Erntegut in Förderrichtung Fa (Fig.1) zum mittleren Schwad gefördert werden. Zudem kann die Steuerungseinheit 6 zugleich das in Fahrtrichtung gesehen rechte Mähwerk 3b aktivieren und die zugehörige Fördereinheit 4b der Mähkombination 1 deaktivieren, wobei die Schwenkeinrichtung 5b vorzugsweise so angesteuert wird, dass sich die Fördereinheit 4b in der Bereitschaftsposition befindet. Dadurch kann das mittels des rechten Mähwerks 3b geschnittene Erntegut in Form eines rechten Schwads abgelegt werden, der sich im Wesentlichen über die gesamte Breite des linken Mähwerks 3b erstreckt.

In analoger Weise kann die Fahrt entlang der Routenführung B bis zum Endpunkt EPB fortgesetzt werden. Es ist ersichtlich, dass durch das beschriebene Verfahren automatisiert eine gewünschte Anordnung der Schwaden erzielt werden kann.

In analoger Weise ist es natürlich auch möglich, dass die verfügbaren Auswurfeinrichtungen 7a, 7b abhängig von der geographischen Information I automatisch ortsabhängig aktiviert bzw. deaktiviert werden können. Auch eine automatisierte ortsabhängige Anpassung der Auswurfweite und/oder des Auswurfwinkels wären dadurch möglich. Durch eine entsprechende Wahl der Auswurfweite und/oder des Auswurfwinkels könnte beispielsweise das geförderte Erntegut einer in Fahrtrichtung links befindlichen Fördereinheit 4a quer zur Fahrtrichtung über den mittleren Schwad in Richtung des gegenüberliegenden rechten Schwads des rechten Mähwerks 3b ausgeworfen werden (oder umgekehrt). Dadurch kann eine Lücke zwischen dem rechten Schwad und dem mittleren Schwad mit dem ausgeworfenen Erntegut des linken Mähwerks 3a gefüllt werden (oder umgekehrt), wodurch eine verbesserte Ablage des Ernteguts erzielt werden kann.

Alternativ oder zusätzlich könnten auch die verfügbaren Aufbereitungsvorrichtungen 8a, 8b und/oder die verstellbaren Leiteinrichtungen 9a, 9b abhängig von der geographischen Information I automatisch ortsabhängig aktiviert bzw. deaktiviert werden. Auch eine automatische ortsabhängige Steuerung des Verstaumechanismus 17 in Abhängigkeit der geographischen Information I wäre denkbar, beispielsweise um die Mähwerke 3a, 3b inkl. der Fördereinheiten 4a, 4b relativ zur Aufhängung 10 von der Betriebsposition in die Transportposition zu verlagern. Dies könnte im gezeigten Beispiel nach Abschluss der Routenführung B erfolgen, bevor das Fahrzeug 2 die landwirtschaftliche Fläche 18 wieder verlässt.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Mähkombination
- 2: Landwirtschaftliches Fahrzeug
- 3: Mähwerk
- 4: Fördereinheit
- 5: Schwenkeinrichtung
- 6: Steuerungseinheit
- 7: Auswurfeinrichtung
- 8: Aufbereitungsvorrichtung
- 9: Leiteinrichtung
- 10: Aufhängung
- 11: Zugeinrichtung
- 12: Fahrwerk
- 13: Kommunikationsschnittstelle
- 14: Fahrzeug-Steuerungseinheit
- 15: Schwenkeinheit
- 16: Profilrolle
- 17: Verstaumechanismus
- 18: Landwirtschaftliche Fläche
- 19: Vorgewende
- 20: Front-Mähwerk
- α: Auswurfwinkel
- A: Erste Routenführung
- B: Zweite Routenführung
- F: Förderrichtung
- H: Fahrzeug-Hochachse
- I: Geographische Information
- L: Fahrzeug-Längsachse
- Q: Fahrzeug-Querachse

## Patentansprüche

1. Mähkombination (1) für ein landwirtschaftliches Fahrzeug (2), umfassend eine Anzahl von Mähwerken (3) zum Schneiden von Erntegut und je Mähwerk (3) eine Fördereinheit (4) zum Fördern des geschnittenen Ernteguts in einer Förderrichtung (F), die im Betrieb quer zu einer Fahrzeuglängsachse (L) des landwirtschaftlichen Fahrzeugs (2) verläuft, wobei für jede Fördereinheit (4) eine Schwenkeinrichtung (5) vorgesehen ist, die dazu ausgebildet ist, die Fördereinheit (4) relativ zum zugehörigen Mähwerk (3) zwischen einer Arbeitsposition und einer Bereitschaftsposition zu verschwenken und wobei eine Steuerungseinheit (6) zur Steuerung der Mähkombination (1) vorgesehen ist, **dadurch gekennzeichnet, dass** die Steuerungseinheit (6) dazu ausgebildet ist, die Mähkombination (1) abhängig von einer geographischen Information (I) in einem festgelegten Betriebsmodus zu betreiben.

2. Mähkombination (1) nach Anspruch 1, **dadurch gekennzeichnet, dass** die geographische Information (I) zumindest eine der folgenden Informationen umfasst: einen aktuellen Standort des Fahrzeugs (2), eine geplante Routenführung (A, B) des Fahrzeugs (2), eine Geländeinformation, eine Information über das Erntegut.

3. Mähkombination (1) nach Anspruch 1 oder 2, **dadurch gekennzeichnet, dass** der festgelegte Betriebsmodus ein selektives Aktivieren und Deaktivieren zumindest von Teilen der Mähkombination (1) umfasst, insbesondere der Anzahl von Mähwerken (3) und/oder Fördereinheiten (4) und/oder Schwenkeinrichtungen (5).

4. Mähkombination (1) nach einem der Ansprüche 1 bis 3, **dadurch gekennzeichnet, dass** die geographische Information (I) eine Information über einen Wendevorgang, insbesondere einen Wendevorgang in einem Vorgewende (19), enthält und dass die Steuerungseinheit (6) dazu ausgebildet ist, die Mähkombination (1) während des Wendevorgangs zumindest teilweise zu deaktivieren, insbesondere die Anzahl von Mähwerken (3) und/oder Fördereinheiten (4) während des Wendevorgangs zu deaktivieren und/oder die Anzahl von Schwenkeinrichtung (5) derart anzusteuern, dass die Fördereinheit (4) während des Wendevorgangs (A, B) automatisch in die Bereitschaftsposition verschwenkt wird.

5. Mähkombination (1) nach einem der Ansprüche 1 bis 4, **dadurch gekennzeichnet, dass** die Förderrichtung (F) der Anzahl von Fördereinheiten (4) bestimmungsgemäß unveränderbar ist.

6. Mähkombination (1) nach einem der Ansprüche 1 bis 5, **dadurch gekennzeichnet, dass** zumindest eine der Anzahl von Fördereinheiten (4) einen Stetigförderer, insbesondere einen Bandförderer, Kettenförderer oder einen Schraubenförderer, umfasst.

7. Mähkombination (1) nach einem der Ansprüche 1 bis 6, **dadurch gekennzeichnet, dass** zumindest für eine der Anzahl von Fördereinheiten (4) eine, in Förderrichtung (F) gesehen an die Fördereinheit (4) anschließend angeordnete, Auswurfeinrichtung (7) zum Auswerfen von gefördertem Erntegut vorgesehen ist, die von der Steuerungseinheit (6), vorzugsweise unabhängig von der Fördereinheit (4), steuerbar ist, wobei die Steuerungseinheit (6) dazu ausgebildet ist, die Auswurfeinrichtung (7) abhängig von der geographischen Information (I) in einem festgelegten Betriebsmodus zu betreiben, wobei die Auswurfeinrichtung (7) vorzugsweise eine Anzahl von angetriebenen Profilrollen (16) umfasst, die jeweils um eine quer zur Förderrichtung (F) verlaufende Drehachse drehbar sind und/oder zumindest einen Stetigförderer, vorzugsweise ein Förderband, umfasst und/oder eine Schwenkeinheit (15) zum rotatorischen Schwenken der Auswurfeinrichtung (7) relativ zur Fördereinheit (4), insbesondere zur Veränderung eines Auswurfwinkels (α) des Ernteguts, umfasst, und/oder eine Verstelleinheit zum translatorischen Verstellen der Auswurfeinrichtung (7) relativ zur Fördereinheit (4), insbesondere zur Veränderung eines Auswurfwinkels (α) des Ernteguts, umfasst, wobei die Schwenkeinheit (15) und/oder die Verstelleinheit von der Steuerungseinheit (6), vorzugsweise unabhängig von einem Antrieb der Auswurfeinrichtung (7), steuerbar ist.

8. Mähkombination (1) nach einem der Ansprüche 1 bis 7, **dadurch gekennzeichnet, dass** für zumindest eine der Anzahl von Mähwerken (3) eine Aufbereitungsvorrichtung (8) für geschnittenes Erntegut vorgesehen ist, die von der Steuerungseinheit (6) steuerbar ist, wobei die Steuerungseinheit (6) vorzugsweise dazu ausgebildet ist, die Aufbereitungsvorrichtung (8) abhängig von der geographischen Information (I) in einem festgelegten Betriebsmodus zu betreiben, wobei die Aufbereitungsvorrichtung (8) insbesondere einen Zinkenaufbereiter oder Walzenaufbereiter umfasst und/oder dass für zumindest eine der Anzahl von Mähwerken (3) eine verstellbare Leiteinrichtung (9) zum Leiten von mittels des Mähwerks (3) geschnittenem Erntegut und/oder zum Leiten von mittels der Aufbereitungsvorrichtung (8) aufbereitetem Erntegut vorgesehen ist, die von der Steuerungseinheit (6) steuerbar ist, wobei die Steuerungseinheit (6) vorzugsweise dazu ausgebildet ist, die Leiteinrichtung (9) abhängig von der geographischen Information (I) in einem festgelegten Betriebsmodus zu betreiben.

9. Mähkombination (1) nach einem der Ansprüche 1 bis 8, **dadurch gekennzeichnet, dass** die Mähkombination (1) eine, vorzugsweise standardisierte, Aufhängung (10) zur aufgehängten Befestigung am landwirtschaftlichen Fahrzeug (2) umfasst **oder dass** die Mähkombination (1) ein Fahrwerk (12) umfasst und eine Zugeinrichtung (11) umfasst, die mit dem landwirtschaftlichen Fahrzeug (2) koppelbar ist, wobei die Mähkombination (1) vorzugsweise einen Verstaumechanismus (17) umfasst, der dazu ausgebildet ist, die Anzahl von Mähwerken (3) inkl. Fördereinheit (4) relativ zur Aufhängung (10) oder relativ zum Fahrwerk (12) von einer Betriebsposition in eine Transportposition zu verlagern, wobei die Anzahl von Fördereinheiten (4) in der Transportposition vorzugsweise so angeordnet sind, dass die Förderrichtung (F) im Wesentlichen parallel zu einer Fahrzeug-Hochachse (H) des landwirtschaftlichen Fahrzeugs (2) ausgerichtet ist, wobei die Steuerungseinheit (6) dazu ausgebildet ist, den Verstaumechanismus (17) in Abhängigkeit der geographischen Information (I) in einem festgelegten Betriebsmodus zu betreiben.

10. Mähkombination (1) nach Anspruch 9, **dadurch gekennzeichnet, dass** die Zugeinrichtung (11) dazu ausgebildet ist, die Mähkombination (1) im Betrieb mit einem seitlichen Versatz zum landwirtschaftlichen Fahrzeug (2) zu ziehen, wobei die Zugeinrichtung (11) vorzugsweise eine Lenkvorrichtung umfasst, die dazu ausgebildet ist, die Mähkombination (1) zumindest in eine erste Versatzposition zu lenken, die sich im Betrieb rechts der Fahrzeug-Längsachse (L) befindet und in eine zweite Versatzposition zu lenken, die sich im Betrieb links der Fahrzeug-Längsachse (L) befindet und wobei die Lenkvorrichtung von der Steuerungseinheit (6) derart ansteuerbar ist, dass die Mähkombination (1) abhängig von der geographischen Information (I) in eine Versatzposition lenkbar ist.

11. Mähkombination (1) nach einem der Ansprüche 1 bis 10, **dadurch gekennzeichnet, dass** die Mähkombination (1) einen hydraulischen Antrieb umfasst, der dazu ausgebildet ist, vom landwirtschaftlichen Fahrzeug (2) mit Antriebsenergie versorgt zu werden, wobei der hydraulische Antrieb vorzugsweise einen offenen Hydraulikkreis aufweist, der mit einem Hydraulikkreis des landwirtschaftlichen Fahrzeugs (2) koppelbar ist und/oder einen geschlossenen Hydraulikkreis mit zumindest einer Hydraulikpumpe aufweist, die von einem mechanischen Abtrieb des landwirtschaftlichen Fahrzeugs (2) antreibbar ist und/oder dass die Mähkombination (1) einen elektrischen Antrieb umfasst, der dazu ausgebildet ist, vom landwirtschaftlichen Fahrzeug (2) mit elektrischer Antriebsenergie versorgt zu werden.

12. Mähkombination (1) nach einem der Ansprüche 1 bis 11, **dadurch gekennzeichnet, dass** die Steuerungseinheit (6) eine Kommunikationsschnittstelle (13) aufweist und über eine Kommunikationsverbindung mit einer Fahrzeug-Steuerungseinheit (14) des landwirtschaftlichen Fahrzeugs (2) verbindbar ist, wobei die Mähkombination (1) vorzugsweise zumindest teilweise über die Fahrzeug-Steuerungseinheit (14) steuerbar ist und/oder wobei eine Anzahl von Signalen, insbesondere umfassend die geographische Information (I), über die Kommunikationsverbindung (13) von der Fahrzeug-Steuerungseinheit (14) an die Steuerungseinheit (6) übermittelbar sind.

13. Mähkombination (1) nach einem der Ansprüche 1 bis 12, **dadurch gekennzeichnet, dass** die Mähkombination (1) ein Sensorsystem zur Erfassung der geographischen Information (I) umfasst.

14. Mähkombination (1) nach einem der Ansprüche 1 bis 13, **dadurch gekennzeichnet, dass** die Mähkombination (1) zwei Mähwerke (3a, 3b) mit jeweils einer Fördereinheit (4a, 4b), einer Schwenkeinrichtung (5a, 5b) und optional jeweils einer Aufbereitungsvorrichtung (8a, 8b) und/oder einer Leiteinrichtung (9a, 9b) und/oder Auswurfeinrichtung (7a, 7b) umfasst, wobei die Mähwerke (3a, 3b) im Betrieb so angeordnet sind, dass sich die Fahrzeug-Längsachse (L) des landwirtschaftlichen Fahrzeugs (2) zwischen den Mähwerken (3a, 3b) befindet und die Mähwerke (3a, 3b) von der Fahrzeug-Längsachse (L) beabstandet sind und wobei die Förderrichtungen (Fa, Fb) der beiden Fördereinheiten (4a, 4b) vorzugsweise einander zugewandt sind und wobei die Steuerungseinheit (6) dazu ausgebildet ist, die Mähwerke (3a, 3b) und/oder Fördereinheiten (4a, 4b) und/oder Schwenkeinrichtungen (5a, 5b) und/oder Aufbereitungsvorrichtungen (8a, 8b) und/oder Leiteinrichtungen (9a, 9b) unabhängig voneinander zu steuern, insbesondere selektiv zu aktivieren und zu deaktivieren.

15. Landwirtschaftliches Fahrzeug (2), **dadurch gekennzeichnet, dass** an einem Heck des Fahrzeugs (2) eine Mähkombination (1) nach einem der Ansprüche 1 bis 14 angeordnet ist und dass die Steuerungseinheit (6) der Mähkombination (1) entweder über eine Kommunikationsverbindung mit einer Fahrzeug-Steuerungseinheit (14) des landwirtschaftlichen Fahrzeugs (2) verbunden ist und die Fahrzeug-Steuerungseinheit (14) dazu ausgebildet ist, die geographische Information (I) an die Steuerungseinheit (6) der Mähkombination (1) zu übermitteln oder dass die Steuerungseinheit (6) der Mähkombination (1) in der Fahrzeug-Steuerungseinheit (14) integriert ist und die Fahrzeug-Steuerungseinheit (14) dazu ausgebildet ist, die Mähkombination (1) zu steuern.

16. Landwirtschaftliches Fahrzeug (2) nach Anspruch 15, **dadurch gekennzeichnet, dass** an einer Front des Fahrzeugs (2) ein Front-Mähwerk (20) angeordnet ist, das von der Fahrzeug-Steuerungseinheit (14) steuerbar ist und dass die Fahrzeug-Steuerungseinheit (14) dazu ausgebildet ist, das Front-Mähwerk (20) abhängig von der geographischen Information (I) in einem festgelegten Betriebsmodus zu betreiben.

17. Verfahren zum Betreiben eines landwirtschaftlichen Fahrzeugs (2), wobei an einem Heck des Fahrzeugs (2) eine Mähkombination (1), vorzugsweise nach einem der Ansprüche 1 bis 14, befestigt ist, die eine Anzahl von Mähwerken (3) zum Schneiden von Erntegut und je Mähwerk (3) eine Fördereinheit (4) zum Fördern des geschnittenen Ernteguts in einer, vorzugsweise bestimmungsgemäß unveränderbaren, Förderrichtung (F), die quer zu einer Fahrzeuglängsachse des landwirtschaftlichen Fahrzeugs (2) verläuft, umfasst, wobei für jede Fördereinheit (4) eine Schwenkeinrichtung (5) vorgesehen ist, die dazu ausgebildet ist, die Fördereinheit (4) relativ zum zugehörigen Mähwerk (3) zwischen einer Arbeitsposition und einer Bereitschaftsposition zu verschwenken und wobei die Mähkombination (1) mittels einer Steuerungseinheit (6) gesteuert wird, **dadurch gekennzeichnet, dass** die Steuerungseinheit (6) die Mähkombination (1) abhängig von einer geographischen Information (I) in einem festgelegten Betriebsmodus betreibt, wobei vorzugsweise die Anzahl von Mähwerken (3) und/oder Fördereinheiten (4) und/oder Schwenkeinrichtungen (5) von der Steuerungseinheit (6) abhängig von der geographischen Information (I) selektiv aktiviert und deaktiviert werden.

18. Verfahren nach Anspruch 17, **dadurch gekennzeichnet, dass** die geographische Information (I) eine Information über einen Wendevorgang, insbesondere einen Wendevorgang in einem Vorgewende (19), enthält und dass die Steuerungseinheit (6) die Anzahl von Mähwerken (3) und/oder Fördereinheiten (4) während des Wendevorgangs deaktiviert und/oder die Anzahl von Schwenkeinrichtung (5) derart ansteuert, dass die zugehörige Fördereinheit (4) während des Wendevorgangs automatisch in die Bereitschaftsposition verschwenkt wird und/oder dass als die geographische Information (I) zumindest eine der folgenden Informationen verwendet wird: einen aktueller Standort des Fahrzeugs (2), eine geplante Routenführung (A, B) des Fahrzeugs (2), eine Geländeinformation, eine Information über das Erntegut.
